# EUROPÄISCHE PATENTSCHRIFT

(11) **EP 2 931 735 B1**
(45) Veröffentlichungstag und Bekanntmachung des Hinweises auf die Patenterteilung: **02.09.2020**
(21) Anmeldenummer: 13802665.3
(22) Anmeldetag: 11.12.2013
(51) Int. Cl.: C07F 15/00

(54) **VERFAHREN ZUR HERSTELLUNG WASSERHALTIGER ZUBEREITUNGEN VON KOMPLEXEN DER PLATINGRUPPENMETALLE**
PROCESS FOR THE PREPARATION OF AQUEOUS PREPARATIONS OF COMPLEXES OF PLATINUM GROUP METALS
PROCÉDÉ DE FABRICATION DE PRÉPARATIONS CONTENANT DE L'EAU À BASE DE COMPLEXES DE PLATINOÏDES

(30) Priorität: 12.12.2012 EP 12196767
(43) Veröffentlichungstag der Anmeldung: 21.10.2015
(73) Patentinhaber: Umicore AG & Co. KG, 63457 Hanau-Wolfgang (DE)
(72) Erfinder: WOERNER, Eileen, 61130 Nidderau (DE); KARCH, Ralf, 63801 Kleinostheim (DE); RIVAS-NASS, Andreas, 64625 Bensheim (DE); DOPPIU, Angelino, 63500 Seligenstadt (DE)
(86) Internationale Anmeldenummer: PCT/EP2013/076263
(87) Internationale Veröffentlichungsnummer: WO 2014/090891

(56) Entgegenhaltungen:
- US-A- 5 244 647
- US-A1- 2002 012 868
- US-B1- 7 442 820
- MALCOLM J. ARENDSE ET AL: "-Ascorbic Acid. Crystal Structure of Ascorbato- C 2 , O 5 -ethylenediamineplatinum(II) Dihydrate", INORGANIC CHEMISTRY, Bd. 38, Nr. 25, 23. November 1999 (1999-11-23), Seiten 5864-5869, XP055062971, ISSN: 0020-1669, DOI: 10.1021/ic990152z
- FELIN M G; POPOV L V; ZHELIGOVSKAYA N N; SPITSYN V I: "Oxidation-reduction properties of platinum complexes of the amino type", BULLETIN OF THE ACADEMY OF SCIENCES OF THE USSR, DIVISION OF CHEMICAL SCIENCE, Bd. 21, Nr. 4, 1972, Seiten 880-882, XP002698522, ISSN: 1573-9171, DOI: 10.1007/BF00854492
- DATABASE CA [Online] CHEMICAL ABSTRACTS SERVICE, COLUMBUS, OHIO, US; KNYAZEVA, N. N. ET AL: "Association of some complexes of platinum(II) and palladium(II) with anions in aqueous solutions", XP002698523, gefunden im STN Database accession no. 1979:410128 -& KNYAZEVA, N. N. ET AL: "Association of some complexes of platinum(II) and palladium(II) with anions in aqueous solutions", KOORDINATSIONNAYA KHIMIYA, Bd. 5, Nr. 4, 1979, Seiten 572-579, XP008162881, ISSN: 0132-344X
- DATABASE CA [Online] CHEMICAL ABSTRACTS SERVICE, COLUMBUS, OHIO, US; KUKUSHKIN, YU. N. ET AL: "Influence of the nature of inner-sphere amines on oxidation-reduction potentials of platinum complexes", XP002698524, gefunden im STN Database accession no. 1970:461972 -& KUKUSHKIN, YU. N. ET AL: "Influence of the nature of inner-sphere amines on oxidation-reduction potentials of platinum complexes", ZHURNAL NEORGANICHESKOI KHIMII, Bd. 15, Nr. 6, 1970, Seiten 1585-1589, XP008162882, ISSN: 0044-457X

## Beschreibung

Die vorliegende Erfindung betrifft ein Verfahren zur Herstellung wasserhaltiger Verbindungen und Komplexe der Platingruppenmetalle sowie deren Zubereitungen, Lösungen und Folgeprodukte. Die nach dem Verfahren hergestellten wasserhaltigen Zubereitungen der Platingruppenmetall-Komplexe sind halogenarm und finden Verwendung zum Beispiel als Edelmetall-Komponenten in galvanischen Bädern sowie als Vorläuferverbindungen ("Precursoren") zur Herstellung von heterogenen Katalysatoren wie beispielsweise Autoabgaskatalysatoren oder Trägerkatalysatoren.Unter den Platingruppenmetallen (nachfolgend abgekürzt "PGM") werden in dieser Anmeldung die Metalle der zweiten und dritten Reihe der 8. Nebengruppe des Periodensystems der Elemente (PSE) verstanden, also die Metalle Ruthenium (Ru), Rhodium (Rh), Palladium (Pd), Osmium (Os), Iridium (Ir) und Platin (Pt). Bevorzugt betrifft die Erfindung die Verbindungen der Platingruppenmetalle Platin (Pt), Palladium (Pd), Rhodium (Rh) und Iridium (Ir). Unter "PGM-Ammin-Komplexen" werden in dieser Anmeldung Komplexe der Platingruppenmetalle mit Ammoniak-Liganden (NH₃-Liganden) verstanden. Solche Komplexe werden manchmal auch als "Ammoniakate" bezeichnet. Beispiele sind Rhodium(III)-hexaammin-trichlorid [Rh(NH₃)₆]Cl₃ oder Platin(II)-tetraammin-dichlorid [Pt(NH₃)₄]Cl₂. Unter der Bezeichnung "PGM-Amin-Komplexe" werden Komplexe der Platingruppenmetalle mit Amino-, Alkylamino-, Dialkylamino-, Hydroxyalkylamino- sowie Alkoxyamino-Liganden zusammengefasst. Bevorzugt werden damit die Liganden Ethylendiamin (Abkürzung in dieser Anmeldung "en") sowie 2-Aminoethanol (Ethanolamin, Abkürzung in dieser Anmeldung "EA") bezeichnet.

Viele der einfachen und kommerziell erhältlichen PGM-Verbindungen, wie beispielsweise Palladiumchlorid (PdCl₂), Hexachloroplatinsäure (H₂PtCl₆) oder Ammin-Verbindungen der Platingruppenmetalle wie Pt(NH₃)₄Cl₂ enthalten Halogenide, insbesondere Chloridionen. Chloridische Lösungen oder Feststoffe der PGMs stellen typischerweise die industriellen Ausgangsprodukte für die Herstellung der entsprechenden höherwertigen Verbindungen dar. Diese chloridhaltigen Lösungen oder Feststoffe werden durch Löseprozesse der reinen Edelmetalle oder aber als Produkte von Edelmetallrecyclingprozessen gewonnen. Die mit diesen Verbindungen hergestellten PGM-haltigen Produkte (beispielsweise Trägerkatalysatoren oder galvanische Bäder) weisen eine Kontamination mit Chloridresten auf, die unter Anderem aus Korrosionsgründen unerwünscht ist. So greifen zum Beispiel chloridhaltige Edelmetall-Bäder in der Galvanotechnik das Anlagenmaterial an. Katalysatoren, die unter Verwendung von chloridhaltigen Precursoren hergestellt werden, können ebenfalls ein korrosive Wirkung besitzen und eine reduzierte Aktivität sowie eine verkürzte Lebensdauer aufweisen. Darüber hinaus ist bekannt, dass chlorhaltige PGM-Salze, insbesondere chlorhaltige Pt-Salze, gesundheitsgefährdende Eigenschaften aufweisen, und z.B. Allergien auslösen können; sie sind daher aus Gründen des Arbeitsschutzes unerwünscht.

Unter der Bezeichnung "halogenidarm" bzw. "chloridarm" oder "chlorarm" wird im Folgenden ein Gesamthalogenwert bzw. Gesamtchlorgehalt von < 5000 ppm, vorzugsweise < 2000 ppm verstanden (Messung z.B. nach Wickbold-Methode, bezogen auf den jeweiligen Metallgehalt der Zubereitung). Die Halogene umfassen die Gruppe Fluor, Chlor, Brom und Iod, als Halogenide werden die entsprechenden Anionen F⁻, Cl⁻, Br⁻ und I⁻ bezeichnet. Aus den oben genannten Gründen ist die Suche nach geeigneten, kommerziell attraktiven halogenarmen Verbindungen bzw. Zubereitungen der Platingruppenmetalle ein wichtiges Arbeitsgebiet der industriellen Edelmetallchemie. Auch wenn viele halogenarme Verbindungen, beispielsweise die Nitrate oder Sulfate der Platingruppenmetalle wie Platinnitrat, Rhodiumnitrat, Palladiumsulfat, aber auch komplexere Substanzen, wie [(NH₃)₄Pd](HCO₃)₂ kommerziell verfügbar sind, so ist doch die Suche nach neuen Substanzen ein kontinuierlich verfolgtes Arbeitsgebiet.

### Stand der Technik

Viele der gemäß Formelbild halogenfreien PGM-Verbindungen weisen aufgrund ihres Herstellprozesses noch hohe Resthalogengehalte auf, die nur durch aufwändige und somit teure Verfahren, z.B. Ionenaustauscherverfahren reduziert werden können. Verschiedene halogenfreie PGM-Verbindungen können nur durch solche Ionenaustauscherverfahren hergestellt werden. Dies trifft vor allem auf Verbindungen von Platin und Rhodium zu; im Fall von Palladium sind die chlorfreien Verbindungen Palladiumnitrat und Palladiumsulfat als wässrige Lösungen direkt zugänglich.

So ist aus der EP 512,960 A1 und der US 5,244,647 ein Verfahren zur Herstellung von chlorarmem Rhodium(III)-hexaammin-trihydroxid [Rh(NH₃)₆](OH)₃ bzw. Platin(II)-tetraammin-dihydroxid [Pt(NH₃)₄](OH)₂ bekannt, das zur Entfernung der Chloridionen ein Verfahren mit Anionenaustauscher verwendet. Dabei wird von den Verbindungen [Rh(NH₃)₆]Cl₃ bzw. [Pt(NH₃)₄]Cl₂ ausgegangen. Auch die Verbindung [Rh(en)₃](OH)₃ ist bekannt und besitzt eine CAS-Nr. 198292-46-5. Die Herstellung dieser Verbindung ist jedoch nicht beschrieben.

In der DD 288065 wird ein Verfahren zur Herstellung von reinem Palladium(II)-tetraammin-dihydrogencarbonat [Pd(NH₃)₄](HCO₃)₂ beschrieben, bei dem ein [Pd(NH₃)₄]X₂ Komplex (X= Cl⁻, NO₃⁻) mit einem Kationenaustauscher und einer Ammoniumhydrogencarbonatlösung umgesetzt wird.Weitere Beispiele für chlorarme (bzw. chloridarme) PGM-Verbindungen sind Platin(II)-tetraammin-dihydrogencarbonat [Pt(NH₃)₄](HCO₃)₂, Platin(II)-tetraammin-diacetat [Pt(NH₃)₄](CH₃COO)₂, Platin(II)-tetraammin-dinitrat [Pt(NH₃)₄](NO₃)₂ oder Palladium(II)-tetraammin-diacetat [Pd(NH₃)₄](CH₃COO)₂. Hier werden die chlorfreien Salzlösungen jeweils in mehrstufigen Prozessen aus den entsprechenden Hydrogencarbonaten (Feststoffen) gewonnen.

Die EP 2,116,550 B1 beschreibt eine Methode zur Herstellung chlorfreier Komplexe von Palladium(II)-hydrogencarbonat mit Aminliganden, wobei Palladium(II)-tetraammin-dihydrogencarbonat [Pd(NH₃)₄](HCO₃)₂ mit einem organischen Aminliganden unter Entfernung des Ammoniaks umgesetzt wird. Das Verfahren ist mehrstufig und sehr langwierig, da es längere Zeit dauert, bis der Ammoniak vollständig ausgetrieben ist.

US 2002/012868 zeigt eine Zusammensetzung zur Bildung eines elektrisch leitfähigen Films enthaltend u.A. eine wasserlösliche organometallische Verbindung, die einen elektrisch leitfähigen Film bilden kann. Die organometallische Verbindung ist ein Komplex von Gold, Platin, Silber, Palladium oder Kupfer und kann das Acetat von Tetrakis(monoethanolamin)platin (II) sein, auf deren Herstellungsverfahren und Chlorgehalt nicht eingegangen wird. US 7442820 B1 offenbart ein Verfahren zur Herstellung von Platinacetylacetonatkomplexen.

A. Syamal und B.K. Gupta (Transition Met. Chem. 8, 280-282, 1983) beschreiben die Herstellung von quadratisch planaren Platin(II)-Komplexen mit N-haltigen Chelatliganden und sauerstoffhaltigen Liganden (wie Oxalat oder Acetat). Letztere sind direkt an das Pt(II)-Zentralatom komplex gebunden, d.h., sie befinden sich innerhalb der Koordinationssphäre des Pt(II)-Zentralatoms. Bei der Herstellung solcher Komplexe (wie beispielsweise Pt(II)(NH₂C₂H₄OH)(CH₃COO)₂, wird von chlorhaltigen Verbindungen wie K₂PtCl₄ ausgegangen. Die von Syamal und Gupta beschriebenen Komplexe unterscheiden sich im Aufbau von den Pt(II)-Komplexen der vorliegenden Erfindung; da bei der Herstellung auch von chlorhaltigen Verbindungen ausgegangen wird, sind auch hier aufwendige Methoden zur Entfernung der Chloridionen notwendig.Die herkömmlichen halogenfreien PGM-Verbindungen, wie beispielsweise die Nitrate oder Sulfate der Platingruppenmetalle weisen Schwefel- bzw. Stickstoffatome auf, die bei einer Pyrolysereaktion umweltbelastende Schwefel- bzw. Stickoxide freisetzen. Aus diesem Grund sind PGM-Precursorverbindungen bevorzugt, die bei thermischer Belastung eine rückstandsfreie Zersetzung aufweisen und keine N-Atome oder S-Atome besitzen. Zusammenfassend sind die genannten halogenarmen PGM-Verbindungen aufgrund ihrer mehrstufigen Herstellverfahren und der aufwändigen Reinigungsschritte (e.g. Ionenaustauscherverfahren) in der Regel teuer und kommen als Ausgangsprodukte für großtechnische Verfahren kaum infrage.

Es ist daher eine Aufgabe der vorliegenden Erfindung, ein wirtschaftliches und kostengünstiges Verfahren zur Herstellung halogenarmer, insbesondere chlorarmer PGM-Verbindungen und deren wasserhaltigen Zubereitungen und Lösungen bereitzustellen. Diese Zubereitungen bzw. Lösungen sollten einen pH-Wert im Bereich zwischen schwach sauer und basisch aufweisen. Weiterhin sollen Zubereitungen zugänglich gemacht werden, die bisher unbekannte PGM-Komplexe enthalten. Diese Aufgabe wird durch die Bereitstellung des Verfahrens gemäß den beigefügten Ansprüchen gelöst. Weiterhin werden neue PGM-haltige Zubereitungen bereitgestellt, die mit Hilfe des erfindungsgemäßen Verfahrens zugänglich sind.

### Zusammenfassung der Erfindung

Die Erfindung betrifft ein Verfahren zur Herstellung von wasserhaltigen Zubereitungen von Verbindungen und Komplexen der Platingruppenmetalle (PGM), insbesondere der Metalle Platin (Pt), Palladium (Pd), Rhodium (Rh) und Iridium (Ir). Die Erfindung umfasst im Wesentlichen drei Ausführungsformen.

In einer ersten Ausführungsform betrifft die Erfindung ein Verfahren zur Herstellung wasserhaltiger Zubereitungen von Komplexen der Platingruppenmetalle (PGM) mit der allgemeinen Formel (1)

[M^{A}(L)ₐ(H₂O)_{b}(O²⁻)_{c}(OH⁻)_{d}](OH⁻)ₑ(H⁺)_{f} (1)

worin
- M^{A} =: Platin (Pt) oder Palladium (Pd) in der Oxidationsstufe +2 vorliegt und
- L =: ein neutraler einzähniger oder zweizähniger Donorligand sowie
- a =: eine ganze Zahl von 1 bis 4 (für einzähnige Donorliganden) oder eine ganze Zahl von 1 bis 2 (für zweizähnige Donorliganden),
- b =: eine ganze Zahl von 0 bis 3,
- c =: eine ganze Zahl von 0 bis 3,
- d =: eine ganze Zahl von 0 bis 3,
- e =: eine ganze Zahl von 0 bis 2 und
- f =: eine ganze Zahl von 0 bis 4
bedeutet und worin das Platingruppenmetall M^{A} die Koordinationszahl 4 aufweist,das dadurch gekennzeichnet ist, dass die Hydroxokomplexe H₂Pd^{II}(OH)₄ (im Fall von M^{A} = Pd) oder H₂Pt^{IV}(OH)₆ (im Fall von M^{A} = Pt) jeweils mit einem neutralen Donorliganden L umgesetzt werden, wobei mindestens eine Hydroxogruppe des betreffenden Hydroxokomplexes ausgetauscht wird und die Umsetzung im Fall von M^{A} = Pt in Gegenwart eines Reduktionsmittels durchgeführt wird, der Gesamthalogengehalt der Zubereitungen < 5000 ppm (bezogen auf den PGM-Gehalt) beträgt, die wasserhaltigen Zubereitungen wässrige Lösungen sind und die Umsetzung in wässriger Lösung erfolgt.

In einer weiteren Ausführungsform betrifft die Erfindung ein Verfahren zur Herstellung wasserhaltiger Zubereitungen von Komplexen der Platingruppenmetalle (PGM) mit der allgemeinen Formel (2)

[M^{B}(L)ₐ(H₂O)_{b}(O²⁻)_{c}(OH⁻)_{d}](OH⁻)ₑ(H⁺)_{f} (2)

worin
- M^{B} =: Platin (Pt) in der Oxidationsstufe +4 vorliegt und
- L =: ein neutraler einzähniger oder zweizähniger Donorligand sowie
- a =: eine ganze Zahl von 1 bis 6 (für einzähnige Donorliganden) oder eine ganze Zahl von 1 bis 3 (für zweizähnige Donorliganden),
- b =: eine ganze Zahl von 0 bis 5,
- c =: eine ganze Zahl von 0 bis 4,
- d =: eine ganze Zahl von 0 bis 5,
- e =: eine ganze Zahl von 0 bis 4 und
- f =: eine ganze Zahl von 0 bis 4
bedeutet und worin das Platingruppenmetall M^{B} die Koordinationszahl 6 aufweist,das dadurch gekennzeichnet ist, dass der Hydroxokomplex H₂Pt^{IV}(OH)₆ mit einem neutralen Donorliganden L umgesetzt wird, wobei mindestens eine Hydroxogruppe des Hydroxokomplexes ausgetauscht wird, der Gesamthalogengehalt der Zubereitungen < 5000 ppm (bezogen auf den PGM-Gehalt) beträgt, die wasserhaltigen Zubereitungen wässrige Lösungen sind und die Umsetzung in wässriger Lösung erfolgt. Dabei erfolgt die Umsetzung ohne Zusatz eines Reduktionsmittels.

In einer dritten Ausführungsform betrifft die Erfindung ein Verfahren zur Herstellung wasserhaltiger Zubereitungen von Komplexen der Platingruppenmetalle (PGM) mit der allgemeinen Formel (3)

[M^{C}(L)ₐ(H₂O)_{b}(O²⁻)_{c}(OH⁻)_{d}](OH⁻)ₑ(H⁺)_{f} (3)

worin
- M^{C} =: Rhodium (Rh) oder Iridium (Ir) in der Oxidationsstufe +3 vorliegt und
- L =: ein neutraler einzähniger oder zweizähniger Donorligand sowie
- a =: eine ganze Zahl von 1 bis 6 (für einzähnige Donorliganden oder eine ganze Zahl von 1 bis 3 (für zweizähnige Donorliganden),
- b =: eine ganze Zahl von 0 bis 5,
- c =: eine ganze Zahl von 0 bis 4,
- d =: eine ganze Zahl von 0 bis 5,
- e =: eine ganze Zahl von 0 bis 3 und
- f =: eine ganze Zahl von 0 bis 5
bedeutet und worin das Platingruppenmetall M^{C} die Koordinationszahl 6 aufweist,das dadurch gekennzeichnet ist, dass ein Hydroxokomplex des Typs H₃M^{C}(OH)₆ mit einem neutralen Donorliganden L umgesetzt wird, wobei mindestens eine Hydroxogruppe des Hydroxokomplexes ausgetauscht wird, der Gesamthalogengehalt der Zubereitungen < 5000 ppm (bezogen auf den PGM-Gehalt) beträgt, die wasserhaltigen Zubereitungen wässrige Lösungen sind und die Umsetzung in wässriger Lösung erfolgt.

Die Indices a - f in den allgemeinen Formeln (1), (2) und (3) werden dabei so gewählt, dass die resultierenden PGM-Komplexe elektroneutral sind.

Bei allen drei Ausführungsformen der Erfindung erfolgt die Umsetzung in der Regel bei einer Reaktionstemperatur im Bereich von 40 bis 110°C und in einer Reaktionszeit im Bereich von 2 bis 24 Stunden. Bevorzugt sind eine Reaktionstemperatur im Bereich von 45 bis 100°C und eine Reaktionszeit im Bereich von 2.5 bis 20 Stunden.

Bei den oben beschriebenen wasserhaltigen PGM-haltigen Zubereitungen handelt es sich um wässrige Lösungen; die Umsetzungen erfolgen in Wasser als Lösungsmittel. Die wasserhaltigen Zubereitungen können jedoch auch organische, wassermischbare Lösungsmittel wie aliphatische Alkohole (beispielsweise Ethanol, Isopropanol, Butanol etc) und/oder aliphatische Ketone (beispielsweise Aceton, Methylethylketon etc) enthalten. In diesen Fällen kann die Umsetzung auch in solchen wasserhaltigen Lösungsmittelgemischen erfolgen.

In den drei verschiedenen Ausführungsformen des erfindungsgemäßen Verfahrens muss der Ligandenaustausch der OH-Gruppen in den Hydroxokomplexen H₂Pd(OH)₄, H₂Pt^{IV}(OH)₆ oder H₃M^{C}(OH)₆ (im Falle von M^{C} = Rh^{III} oder Ir^{III}) durch die neutralen Donorliganden L nicht vollständig erfolgen, so dass auch gemischte Komplexe vorliegen können. Diese können neben den neutralen Donorliganden L (Anzahl a) auch Aquoliganden (= neutrale H₂O-Liganden, Anzahl b), Oxo-Liganden (O²⁻ Liganden, Anzahl c) sowie Hydroxo-Liganden (OH⁻ Liganden, Anzahl d) aufweisen. Die Elektroneutralität des resultierenden PGM-Komplexes wird durch weitere Hydroxoreste des Typs (OH⁻, Anzahl e) sichergestellt, die außerhalb der Komplexsphäre angesiedelt sind. Diese Hydroxoreste werden in der vorliegenden Anmeldung als "Hydroxygruppen" bzw. "Hydroxidgruppen" bezeichnet. Im Falle von insgesamt anionisch geladenen resultierenden PGM-Komplexen muss zur Sicherstellung der Elektroneutralität die Anwesenheit von Protonen (H⁺, Anzahl f) berücksichtigt werden.

Die erfindungsgemäßen Zubereitungen enthalten PGM-Komplexe, die bei vollständigem Hydroxogruppen-Austausch in der Regel kationisch geladen, bei partiellem Austausch und/oder Anwesenheit von Oxo- bzw. Hydroxoliganden auch anionisch geladen oder neutral sind. Bei den erfindungsgemäßen wasserhaltigen Zubereitungen handelt es sich also in vielen Fällen um mehrkomponentige Gemische von anionischen, kationischen oder neutralen Komplexen.

In allen Ausführungsformen des erfindungsgemäßen Verfahrens erfolgt jedoch der Austausch mindestens einer Hydroxogruppe des jeweiligen Hydroxokomplexes durch einen neutralen Donorliganden L, wodurch beispielsweise die Löslichkeit des resultierenden PGM-Hydroxokomplexes in Wasser bewirkt wird. Die Koordinationszahlen (KZ) für einzähnige Liganden, nämlich 4 (für M^{A} = Pt^{II} und Pd^{II}, allg. Formel (1)) und 6 (für M^{B} = Pt^{IV}, allgemeine Formel (2)) und für M^{C} = Rh^{III} oder Ir^{III}, allg. Formel (3)) werden bei den erfindungsgemäßen Komplexen grundsätzlich eingehalten. Dies gilt bei der Verwendung von zweizähnigen Liganden entsprechend.

### Detaillierte Beschreibung der Erfindung

Nachfolgend soll das erfindungsgemäße Verfahren näher beschrieben werden. Im vorliegenden Verfahren geht man grundsätzlich von den halogenarmen Hydroxokomplexen der Platingruppenelemente aus. Dies sind im Falle von Pt, Pd, Rh und Ir beispielsweise die Ausgangsverbindungen H₂Pt(OH)₆ ("Hexahydroxoplatin(IV)-säure"), H₂Pd(OH)₄, H₃Rh(OH)₆ und H₃Ir(OH)₆. Diese Verbindungen werden in verschiedenen, dem Fachmann bekannten Methoden durch Umsetzung der jeweiligen chlorhaltigen Ausgangssalze mit Laugen wie NaOH, KOH oder Ammoniak in wässriger Lösung und ggf. anschließender Neutralisation hergestellt. Die besten Ergebnisse erhält man bei der Verwendung frisch hergestellter bzw. gefällter Hydroxokomplexe (vgl. Beispiele). In einer anderen Schreibweise wird H₂Pt(OH)₆ als Pt(OH)₄ x 2 H₂O, H₂Pd(OH)₄ als Pd(OH)₂ x 2 H₂O, H₃Rh(OH)₆ als Rh(OH)₃ x 3 H₂O und H₃Ir(OH)₆ als Ir(OH)₃ x 3 H₂O dargestellt. Es handelt sich auch hier in der Regel um komplexe Substanzgemische; die unterschiedlichen Schreibweisen sind jedoch für das Wesen der vorliegenden Erfindung unerheblich.

Die Hydroxokomplexe bzw. Hydroxide der PGMs sind im Allgemeinen in Wasser schwer löslich und können somit leicht abgetrennt und durch gängige Methoden halogenidarm gewaschen werden. Im Fall von H₂Pt(OH)₆ werden Restgehalte an Chlor von < 5000 ppm, bevorzugt < 2000 ppm (jeweils bezogen auf Metall Pt) erreicht. Diese Komplexe stellen damit geeignete Ausgangsprodukte für das erfindungsgemäße Verfahren zur Herstellung von halogenidarmen PGM-Verbindungen dar. Der Chlor-Restgehalt der nach dem vorliegenden Verfahren hergestellten PGM-Verbindungen kann dabei durch den Chlorgehalt der Hydroxo-Ausgangskomplexe eingestellt werden.

Es ist dem Fachmann bekannt, dass bei der Umsetzung des Pt-Hydroxo-komplexes H₂Pt(OH)₆ mit Liganden wie Ammoniak oder Ethanolamin regelmäßig das kationische H⁺-Ion ausgetauscht wird und die sechsfache OH-Koordination am Pt-Atom erhalten bleibt. So entstehen beispielsweise bei der Umsetzung von H₂Pt(OH)₆ mit Ammoniak oder Ethanolamin in wässriger Lösung unter milden Bedingungen die entsprechenden Ammoniumsalze der Hexahydroxoplatinsäure, vgl. Gl. (a) und (b):

H₂Pt(OH)₆ + 2 NH₃ => (NH₄)₂ [Pt(OH)]₆ (a)

H₂Pt(OH)₆ + 2 HO-C₂H₄-NH₂ => (HO-C₂H₄-NH₃)₂[Pt(OH)]₆ (b)

In diesen Fällen wird die Ligandensphäre des Platins nicht verändert. Das PGM befindet sich in einem anionischen (d.h. negativ geladenen) hexa-koordinierten Hydroxokomplex. Es wurde nun überraschenderweise gefunden, dass unter besonderen Reaktionsbedingungen ein anderer Reaktionsverlauf erfolgt und der Ligand L in die Koordinationssphäre der PGM-Hydroxoverbindung eintritt und somit ein direkter Ligandenaustausch mit den komplex gebundenen OH-Liganden erfolgt. Dies ist umso überraschender, als die PGM-Hydroxide bisher für den Fachmann als unlöslich in Ammoniak galten (unter anderem können die PGM-Hydroxide ja auch durch Fällung mit Ammoniak hergestellt und isoliert werden).

Die erfindungsgemäßen Reaktionen lassen sich exemplarisch durch die folgenden Gleichungen darstellen (wobei jeweils ein vollständiger Ligandenaustausch dargestellt ist).
a) Im Falle von Komplexen des Typs [M^{A}(L)ₐ(H₂O)_{b}(O²⁻)_{c}(OH⁻)_{d}](OH⁻)ₑ(H⁺)_{f}:
   für M^{A} = Pd(II), a = 4, b = 0; c = 0; d = 0; e = 2, f = 0:
      Ligandenaustausch:

      H₂[Pd^{II}(OH)₄] + 4 L => [Pd^{II}L₄](OH)₂ + 2 H₂O (c)
   für M^{A} = Pt(II), a = 4, b = 0; c = 0; d = 0; e = 2, f = 0:
      Reduktion:

         H₂Pt^{IV}(OH)₆ + 2 e⁻ + 2 H⁺ => H₄Pt^{II}(OH)₆ => H₂[Pt^{II}(OH)₄] + 2 H₂O (d1)
      Ligandenaustausch:

         H₂[Pt^{II}(OH)₄] + 4 L => [Pt^{II}L₄](OH)₂ + 2 H₂O (d2)

   Dabei bedeutet L in Gl. (c) und (d2) jeweils ein neutraler, einzähniger Donorligand. Bei der Verwendung eines zweizähnigen Liganden L (beispielsweise en) beträgt a = 2. Als Reduktionsmittel werden in Gl. (d1) vorzugsweise die weiter unten beschriebenen rückstandsfreien Reduktionsmittel verwendet.
b) Im Falle von Komplexen des Typs [M^{B}(L)ₐ(H₂O)_{b}(O²⁻)_{c}(OH⁻)_{d}](OH⁻)ₑ(H⁺)_{f}:
   für M^{B} = Pt(IV), a = 6, b = 0, c = 0, d = 0, e = 4, f = 0:
   Ligandenaustausch:

   H_{2[}Pt^{IV}(OH)₆]+6 L => [Pt^{IV}L₆](OH)₄ + 2 H₂O (d3)
c) Im Falle von Komplexen des Typs [M^{C}(L)ₐ(H₂O)_{b}(O²⁻)_{c}(OH⁻)_{d}](OH⁻)ₑ(H⁺)_{f}:
   für M^{C} = Rh(III) oder Ir(III); a = 6, b = 0, c = 0, d = 0, e = 3, f = 0:
   Ligandenaustausch:

   H₃[M^{C}(OH)]₆ + 6 L => [M^{C}L₆](OH)₃ + 3 H₂O (e)

Dabei bedeutet L in den Gleichungen (d3) und (e) jeweils ein neutraler einzähniger Donorligand, bei der Verwendung eines zweizähnigen Liganden L (beispielsweise en) beträgt sinngemäß a = 3.

Zu beachten ist, dass es sich bei den o.a. Reaktionsgleichungen um formale, modellhaft vereinfachte Reaktionsgleichungen handelt, bei denen jeweils ein kompletter Austausch der Hydroxogruppen dargestellt ist. Dies ist jedoch in der Praxis nicht immer der Fall. Wie bereits ausgeführt, ist ein Teilaustausch der Hydroxo-Liganden möglich, insbesondere da die Produkte in wässriger Lösung vorliegen. Daher können neben den genannten neutralen Donorliganden L auch andere Donorliganden wie neutrale Aquoliganden (H₂O) oder Oxo-Liganden (O²⁻) oder Hydroxoliganden an das zentrale PGM koordiniert sein. Dies kann beispielsweise im Falle von Rh(III) zu Gemischen führen, in denen neben dem Hauptprodukt [Rh(NH₃)₆](OH)₃ (a = 6, e = 3) weitere, OH-teilsubstituierte kationische Komplexe wie [Rh(NH₃)₅(OH)](OH)₂ oder [Rh(NH₃)₄(OH)₂](OH) (mit a = 4, b = 0, c = 0, d = 2; e = 1, f = 0) vorliegen. Es können aber auch nach außen hin neutrale Komplexe wie [Rh(NH₃)₃(OH)₃] oder auch einfach anionische Komplexe wie H[Rh(NH₃)₂(OH)₄]⁻ (mit a = 2, b = 0, c = 0, d = 4; e = 0, f = 1) gebildet werden (vgl. Beispiel 5).

Weiterhin können auch teilsubstituierte Aquokomplexe auftreten, in denen die neutralen Donorliganden teilweise durch H₂O-Moleküle ersetzt sind. Dies kann beispielsweise bei Pt(IV) zu Gemischen führen, in denen neben dem Hauptprodukt [Pt(NH₃)₆](OH)₄ teilsubstituierte Aquokomplexe wie [Pt(NH₃)₅(H₂O)](OH)₄, [Pt(NH₃)₄(H₂O)₂](OH)₄ oder [Pt(NH₃)₃(H₂O)₃](OH)₄ vorliegen. Dies gilt sinngemäß auch für die übrigen Platingruppenmetalle der hier beschriebenen Erfindung.

Aus Gründen der Übersichtlichkeit und der Vereinfachung wird in der vorliegenden Anmeldung jedoch in der Regel von einem vollständigen Austausch der OH-Liganden im betreffenden PGM-Hydroxokomplex durch den/die neutralen Donorliganden L ausgegangen und das jeweils dadurch entstandene Hauptprodukt angegeben.

Die genannten PGM-Komplexe werden bei den erfindungsgemäßen Umsetzungen in der Regel in voll entsalztem (VE) Wasser oder in einem wasserhaltigen Lösungsmittelgemisch gelöst bzw. dispergiert und der Ligand L zugesetzt.

Das Verfahren der vorliegenden Anmeldung ermöglicht eine andere Koordinationschemie der Platingruppenmetalle: In einer bevorzugten Ausführungsform öffnet es die Tür für halogenarme Platin(II)- oder Palladium(II)-Komplexe sowie für halogenarme Rhodium (III)- bzw. Iridium(III)-Komplexe. Bei diesen Verbindungen kann das PGM in einem kationischen (= positiv geladenen), neutralen oder in einem schwach anionischen (= negativ geladenen) Komplex vorliegen. Sollte das Anion als Hydroxid-Anion (OH⁻) ausserhalb der Komplexsphäre vorliegen, kann es in diesem Fall in einem weiteren Schritt gegen andere Anionen ausgetauscht werden. Das erfindungsgemäße Verfahren umfasst daher grundsätzlich einen Ligandenaustausch (im Falle von M^{A} = Pt(II) begleitet von einer Reduktion), optional gefolgt von einem weiteren Schritt, in dem das außerhalb der Komplexsphäre gebundene OH-Anion durch ein alternatives Anion ausgetauscht wird (nachfolgend kurz als "Anionenaustausch" bezeichnet).

Die einzelnen Schritte des erfindungsgemäßen Verfahrens werden nachfolgend erläutert.

### a) Ligandenaustausch

Im erfindungsgemäßen Verfahren erfolgt der Ligandenaustausch (d.h. die Umsetzung mit dem Donorliganden L) bei erhöhten Temperaturen und über einen längeren Zeitraum. Die Temperaturen liegen dabei im Bereich von 40 bis 110°C, vorzugsweise im Bereich von 45 bis 100°C. Die Reaktionszeit liegt im Bereich von 2 bis 24 h, vorzugsweise im Bereich von 2.5 bis 20 h. Man arbeitet in wässriger Lösung, wie bereits erwähnt können auch organische Lösungsmittel, z.B. aliphatische Alkohole und/oder aliphatische Ketone, ggf. in einem Gemisch mit Wasser, eingesetzt werden.

In der Regel wird der Ligand L im jeweiligen stöchiometrischen Verhältnis zum Reaktionsgemisch zugegeben, ggf. kann der Ligand L auch in überstöchiometrischen Mengen zugesetzt werden. Dies ist beispielsweise bei Ammoniak (NH₃) der Fall, um Verdampfungsverluste bei längeren Reaktionszeiten auszugleichen.

Als Ligand L sind einzähnige oder zweizähnige, neutrale Donorliganden geeignet. die jeweils 2 Elektronen (bei einzähnigen Liganden) oder 4 Elektronen (bei zweizähnigen Liganden) zur Verfügung stellen.

Als einzähnige Donorliganden werden in der Regel Liganden aus der Gruppe der Monoalkylamine, Dialkylamine, Trialkylamine, Monoalkanolamine, Dialkanolamine, Trialkanolamine, Monoarylamine, Diarylamine, Triarylamine, Trialkylphosphine, Triarylphosphine, Trialkoxyphosphine, Triaryloxyphosphine (Triarylphosphite) oder Gemische davon oder Ammoniak eingesetzt. Beispiele für bevorzugte einzähnige Liganden sind die stickstoffhaltigen Liganden Ammoniak (NH₃), Ethylamin, Diethylamin, Ethanolamin ("EA") oder Isopropanolamin. Beispiele für geeignete P-haltige einzähnige Donorliganden sind Triphenylphosphin, Tricyclohexylphosphin und Phosphite wie Triphenylphosphit.

Als zweizähnige Donorliganden kommen jeweils Liganden aus der Gruppe der Alkylendiamine, Arylendiamine, Alkylendiphosphine oder Arylendiphosphine oder Gemische davon zum Einsatz. Beispiele für bevorzugte zweizähnige Liganden sind Ethylendiamin ("en"), o-Phenylendiamin, Trimethylendiamin, Tetramethylendiamin, Pentamethylendiamin, Hexamethylendiamin oder 1,2-Propylendiamin. Ein Beispiel für einen geeigneten zweizähnigen P-haltigen Ligand ist 1,2-bis(diphenylphosphino)-ethan.

Sinngemäß können auch dreizähnige oder mehrzähnigie Donorliganden zum Einsatz kommen. Beispiele für dreizähnige Liganden sind Diethylentriamin (H₂N-CH₂-CH₂-NH-CH₂-CH₂-NH₂, DETA) oder Dipropylentriamin. Beispiele für mehrzähnige Liganden sind Trimethylentetramin oder Hexamethylentetramin. Die Zahlenwerte des Parameters a sind dabei entsprechend anzupassen. Auch Mischungen der oben genannten Liganden sind möglich.

Besonders bevorzugt werden stickstoffhaltige ein- oder zweizähnige Donorliganden verwendet. Ganz besonders bevorzugt werden die Liganden Ammoniak (NH₃), Ethanolamin ("EA"), Ethylendiamin ("en") oder Gemische davon eingesetzt. Beispiele für über einen Ligandenaustausch hergestellte erfindungsgemäße wasserhaltige Zubereitungen sind Zubereitungen, die als Hauptprodukt Komplexe der folgenden Zusammensetzung enthalten:

| | |
|---|---|
| für M^{A} = Pd(II): | [Pd(NH₃)₄](OH)₂, [Pd(en)₂](OH)₂ |
| Für M^{B} = Pt(IV): | [Pt(EA)₆](OH)₄ |
| Für M^{C} = Rh(III), Ir (III): | [Rh(NH₃)₆](OH)₃, [Rh(en)₃](OH)₃, [Ir(en)₃](OH)₃. |

### b) Reduktion

Ein Spezialfall stellt die Herstellung von halogenidarmen Pt(II)-Verbindungen dar. Erfindungsgemäß geht man hierbei von dem Pt-Hydroxokomplex in der Oxydationsstufe +IV (also von H₂Pt^{IV}(OH)₆) aus und setzt diesen mit dem Liganden L in Gegenwart eines Reduktionsmittels um, wobei das vierwertige Pt(IV) zu zweiwertigem Pt(II) reduziert wird. Die hierzu geeigneten Reduktionsmittel sind dem Fachmann bekannt; vorzugsweise verwendet man sogenannte "rückstandsfreie" Reduktionsmittel, d.h. solche, die nach der Reduktionsreaktion keine bzw. geringe Rückstände in der Produktlösung hinterlassen und in der Regel nicht abgetrennt werden müssen. Beispiele für solche "rückstandsfreien" Reduktionsmittel sind Wasserstoff (H₂) bzw. wasserstoffhaltige Gemische wie Formiergas 80/20 oder 95/5; weiterhin Hydrazin (N₂H₄), Formaldehyd (HCHO), Oxalsäure (H₂C₂O₄) oder Ameisensäure (HCOOH). Zur Reduktion von Pt(IV) zu Pt(II) wird das Reduktionsmittel im redox-äquivalenten Verhältnis 1:1 bis 2:1 (bezogen auf Pt) zugegeben. Vorzugsweise werden äquivalente Mengen an Reduktionsmittel verwendet, dabei erfolgt die Zugabe in der Regel gleichzeitig mit der Zugabe des/der Liganden in wässriger Lösung.

Beispiele für solche, über einen Ligandenaustausch und gleichzeitige Reduktion hergestellten erfindungsgemäßen Zubereitungen sind Zubereitungen, die Pt(II)-Komplexe der folgenden Zusammensetzung als Hauptprodukt enthalten:

[Pt(en)₂](OH)₂, [Pt(NH₃)₄](OH)₂, [Pt(EA)₄](OH)₂

### c) Anionenaustausch

Das erfindungsgemäße Verfahren kann weiterhin eine Substitution der Hydroxy-Anionen des Typs (OH⁻)ₑ in den Komplexen der allgemeinen Formeln

[M^{A}(L)ₐ(H₂O)_{b}(O²⁻)_{c}(OH⁻)_{d}](OH⁻)ₑ(H⁺)_{f} (1)

[M^{B}(L)ₐ(H₂O)_{b}(O²⁻)_{c}(OH⁻)_{d}](OH⁻)ₑ(H⁺)_{f} (2)

[M^{C}(L)ₐ(H₂O)_{b}(O²⁻)_{c}(OH⁻)_{d}](OH⁻)ₑ(H⁺)_{f} (3)

durch eines oder mehrere Anionen anorganischer oder organischer Säuren umfassen. In den angegebenen Formeln (1), (2) und (3) ist die Bedeutung von M^{A}, M^{B}, M^{C}, L, a, b, c, d, e und f wie in den vorigen Abschnitten bereits definiert. Bei diesem Anionenaustausch erfolgt im Prinzip eine Neutralisation, d.h. ein Austausch der Hydroxy-Anionen (OH⁻)ₑ durch die entsprechenden Säureanionen; es wird Wasser gebildet. Zur Durchführung des Anionenaustausches sollten kationische Komplexe vorliegen, wobei Index e ≠ 0 sein muss. Bevorzugt ist e eine ganze Zahl von 1 bis 4, besonders bevorzugt ist e = 2, 3 oder 4 sowie f = 0.

Geeignete Säuren sind beispielsweise Essigsäure (CH₃COOH), Ameisensäure, Oxalsäure (H₂C₂O₄) oder Kohlensäure (bzw. Carbonate und Hydrogencarbonate), aber auch Schwefelsäure, Phosphorsäure, Tetrafluorborsäure (HBF₄) oder Salpetersäure. Als Anionen anorganischer oder organischer Säuren können solche aus der Gruppe der Acetate, Formiate, Oxalate, Carbonate, Hydrogencarbonate, Sulfate, Nitrate, Phosphate, Tetrafluorborate oder deren Gemische eingesetzt werden.

Vorteilhafterweise werden äquimolare Mengen dieser Säuren mit den basischen PGM-Hydroxy-Komplexen in wässriger bzw. wasserhaltiger Lösung bzw. Zubereitung umgesetzt. Die Reaktionstemperaturen liegen in der Regel im Bereich von 25 bis 100°C, geeignete Reaktionszeiten liegen im Bereich von 30 min bis 3 Stunden. Man erhält so halogenarme, saure bis neutrale PGM-Verbindungen, die in der Regel in wässriger Lösung bzw. Zubereitung vorliegen und in dieser Form weiter verarbeitet werden.

Dieser Anionenaustausch lässt sich beispielsweise für die Hydroxyverbindungen des Typs [M^{A}(L)ₐ](OH)₂ (M^{A} = Pt^{II}, Pd^{II}, b = c = d = f = 0, e = 2) schematisch durch die Gleichung (f) darstellen:

[M^{A}(L)ₐ](OH)₂ + 2 H⁺X⁻ => [M^{A}(L)ₐ]²⁺ X₂ + 2 H₂O (f)

Dabei stellt X⁻ ein einfach negativ geladenes Säureanion dar, wie beispielsweise HCO₃⁻, CH₃COO⁻, HCOO⁻ oder NO₃. Für zweifach negativ geladenen Anionen Y²⁻ (zum Beispiel CO₃²⁻, C₂O₄²⁻, SO₄²⁻) lässt sich der Anionenaustausch entsprechend Gleichung (g) darstellen:

[M^{A}(L)ₐ](OH)₂ + (H⁺)₂Y²⁻ => [M^{A}(L)ₐ]²⁺ Y + 2 H₂O (g)

In analoger Weise erfolgt der Anionenaustausch auch bei den PGM-Hydroxyverbindungen des Typs [M^{B}(L)ₐ]⁴⁺(OH)₄ (M^{B} = Pt^{IV}, b = c = d = f = 0, e = 4) und [M^{C}(L)ₐ]³⁺(OH)₃ (M^{C} = Rh, Ir, b = c = d = f = 0, e = 3) sowie sinngemäß auch für dreifach negativ geladene Anionen wie beispielsweise PO₄³⁻.

Beispiele für solche, über einen Anionenaustausch hergestellte erfindungsgemäßen wasserhaltigen Zubereitungen sind Zubereitungen, die als Hauptprodukt Komplexe der folgenden Zusammensetzung enthalten:

| | |
|---|---|
| für M^{A} = Pd(II): | [Pd(NH₃)₄](HCO₃)₂, [Pd(en)₂](CH₃COO)₂, [Pd(NH₃)₄]SO₄ |
| für M^{B} = Pt(II): | [Pt(en)₂](CO₃), [Pt(EA)₄](C₂O₄), [Pt(EA)₄](CH₃COO)₂ |
| | [Pt(NH₃)₄](HCO₃)₂, [Pt(EA)₄]CO₃, [Pt(EA)₄](HCO₃)₂ |
| Für M^{B} = Rh(III) | [Rh(NH₃)₆](CH₃COO)₃ |
| Für M^{B} = Ir(III) | [Ir(NH₃)₆](PO₄)₃ |

### Charakterisierung der Komplexe

Bei den Verbindungen und Komplexen der vorliegenden Erfindung handelt es sich in den meisten Fällen um Gemische, wobei unterschiedlich koordinierte PGM-Komplexe in wasserhaltiger oder wässriger Zubereitung bzw. Lösung nebeneinander vorliegen. Die Konzentration des jeweiligen PGM (Pt, Pd, Rh oder Ir) liegt dabei im Bereich von 0.5 bis 15 Gew.-% (bezogen auf das Gesamtgewicht der Zubereitung bzw. Lösung).

Die erfindungsgemäßen halogenarmen wasserhaltigen bzw. wässrigen Zubereitungen, Gemische oder Lösungen weisen in der Regel einen schwach sauren bis basischen pH-Wert auf. So liegt der pH-Wert der erfindungsgemäßen wasserhaltigen Zubereitungen im Bereich pH 5 bis 14, vorzugsweise im Bereich pH 7 bis 14 und besonders bevorzugt im Bereich pH 7 bis 12.

Die Charakterisierung der Zubereitungen bzw. Lösungen und Komplexe erfolgt durch konventionelle analytische Verfahren wie beispielsweise Kapillar-Elektrophorese; die Bestimmung des Pt-, Pd-, Rh- oder Ir- Gehaltes kann mittels ICP ("inductive coupled plasma") oder durch graphimetrische Verfahren durchgeführt werden.

### ¹⁹⁵Pt-NMR-Spekroskopie

Die Koordinationssphäre der erfindungsgemäßen PGM-Komplexe lässt sich im Falle von Platin mittels ¹⁹⁵Pt-NMR-Spekroskopie ermitteln. Die Messungen werden mit einem BRUKER AVANCE 400 (Fa. Bruker BioSpin GmbH, Rheinstetten, DE) durchgeführt; als externe Referenz (δ = 0 ppm) wird H₂PtCl₆ in D₂O verwendet, als "locking solvent" wird eine DMSO-Kapillare eingesetzt. Die chemischen Verschiebungen der erfindungsgemäßen Pt(II)-Komplexe finden sich im Bereich von δ = - 2000 bis - 3200 ppm. In der erfindungsgemäß hergestellten [Pt(NH₃)₄](OH)₂-Lösung kann beispielsweise die Existenz des quadratisch planaren [Pt(NH₃)₄]²⁺- Kations durch das Signal bei δ = - 2576 ppm nachgewiesen werden.

### Bestimmung des Chlorgehalts

Der Chlorgehalt der erfindungsgemäßen PGM-haltigen Zubereitungen liegt im Bereich < 5000 ppm, vorzugsweise < 2000 ppm (Gesamtchlorgehalt, bezogen auf den jeweiligen PGM-Gehalt). Die Bestimmung des Chlorgehalts erfolgt gemäß einem Verfahren, welches die Schritte beinhaltet: (1) Aufnehmen der Probe in einem geeigneten Lösungsmittel, (2) Verbrennen in einer Knallgasflamme, (3) Auffangen des Kondensats in Natronlauge und (4) Bestimmung des Chlorgehalts durch Ionenchromatographie (IC). Dieses Verfahren ist unter der Bezeichnung "Gesamtchloranalyse nach Wickbold" bekannt. Es sind aber auch andere, äquivalente Verfahren anwendbar.

Die wasserhaltigen, PGM-haltigen Zubereitungen bzw. Lösungen finden in vielen Einsatzbereichen Verwendung. Sie können als PGM-Precursoren, beispielsweise in galvanischen Bädern oder zur Herstellung von homogenen oder heterogenen Katalysatoren eingesetzt werden. Weiterhin können Sie zur Erzeugung hochreiner PGM-haltiger Pulver sowie zur Herstellung weiterer Komplexverbindungen verwendet werden. Unter dem Begriff "weitere Komplexverbindungen" werden Komplexverbindungen verstanden, welche von den in der jeweiligen Reaktion eingesetzten Komplexverbindungen verschieden sind. Dies kann beispielsweise durch Reduktion, Oxidation, Ligandenaustausch der eingesetzten Komplexverbindungen oder deren Kombinationen bewirkt werden. Bei Oxidationen und Reduktionen der eingesetzten Komplexverbindungen umfaßt auch Reaktionen, bei welchen nur das jeweilige Metallatom oder nur ein oder mehrere Liganden ihre Oxidationszahl bzw. Oxidationszustand verändern. Die nach dem Verfahren der vorliegenden Patentanmeldung erhaltenen wasserhaltigen Zubereitungen können also eine Umsetzung durchlaufen, um weitere Produkte zu erhalten, wie beispielsweisegalvanische Bäder, homogene oder heterogene Katalysatoren, Metallpulver oder weitere Komplexe erhalten. Zusätzlich oder statt einer Umsetzung kann auch eine Formulierung der nach dem Verfahren der vorliegenden Patentanmeldung erhaltenen wasserhaltigen Zubereitungen erfolgen, worunter unter Anderem das Zusetzen weiterer Bestandteile, beispielsweise von Hilfsstoffen oder Lösungsmitteln, der Austausch von Bestandteilen, wie zum Beispiel des Lösungsmittels und/oder die Entfernung von Bestandteilen, wie die Entfernung von Nebenprodukten oder nicht umgesetzten Edukten, aber auch Lösungsmitteln umfaßt. Das Entfernen von Lösungsmitteln kann auch durchgeführt werden um die Zubereitung zu formulieren um beispielsweise die Konzentration der übrigen Bestandteile zu erhöhen.

Die nachfolgenden Beispiele sollen die Erfindung näher beschreiben ohne jedoch ihren Schutzbereich einzuschränken.

### Allgemeine Vorbemerkungen

Die nachfolgend beschriebenen Reaktionen und Umsetzungen werden unter Luftatmosphäre durchgeführt, wobei als Lösungsmittel voll entsalztes Wasser (VE-Wasser) verwendet wird. In der Regel werden Glaskolben mit Rückflusskühler und Tropftrichter eingesetzt.

Die PGM-Hydroxokomplexe H₂Pt(OH)₆ bzw. Pt(OH)₄ x 2 H₂O) ("Hexahydroxoplatin(IV)-säure"), H₂Pd(OH)₄ bzw Pd(OH)₂ x 2 H₂O, H₃Rh(OH)₆ bzw. Rh(OH)₃ x 3 H₂O, und H₃Ir(OH)₆ bzw. Ir(OH)₃ x 3 H₂O werden in der Regel vor der jeweiligen Umsetzung frisch hergestellt. Hierzu werden die Hydroxide durch Fällung aus chloridischer Lösung mittels Alkali/Erdalkalihydroxid oder Ammoniak gefällt, abgetrennt und mit VE-Wasser halogenidarm gewaschen. Dem Fachmann auf dem Gebiet der Edelmetallchemie sind die entsprechenden Methoden und Arbeitsabläufe bekannt.

### Beispiel 1

### Platin(II)-(tetraammin)-Hydroxid-Lösung

5 g Pt (25.6 mmol) als H₂Pt(OH)₆ (frisch gefällt, Hersteller Umicore AG & Co KG, Hanau) werden in 150 g 25%-iger Ammoniaklösung und 100 mL VE-Wasser in einem Glaskolben mit Rückflusskühler vorgelegt und erwärmt. Bei einer Temperatur von 40°C erfolg die Zugabe von 1.19 g Ameisensäure (25.6 mmol) in 50 mL Wasser verdünnt. Die Reaktionsmischung wird über Nacht (ca. 16 h) erhitzt (T= 70 - 80°C). Es entsteht eine klare, farblose Lösung mit geringen Anteilen an ausreduziertem Platin als grauem Feststoff. Die Analyse der überstehenden klaren Lösung ergibt einen Gehalt von 1.58 Gew.-% Pt; dies entspricht einer Ausbeute von 92% (bezogen auf das eingesetzte Pt). Mit Hilfe der Kapillarelektrophorese wird in der hergestellten Lösung das [Pt^{II}(NH₃)₄]²⁺ Kation identifiziert (Signal bei einer Retentionszeit von 2 bis 2.5 min).

Weiterhin wird mittels ¹⁹⁵Pt-NMR-Spekroskopie die Existenz des [Pt(NH₃)₄]²⁺-Kations nachgewiesen (chemical shift bei δ = - 2576 ppm). Der Gesamtchlorgehalt der wässrigen Platin(II)-(tetraammin)-Hydroxid-Lösung beträgt 560 ppm bezogen auf Platin (Methode nach Wickbold).

### Beispiel 2

### Platin(II)-bis-(ethylendiamin)-Hydroxid-Lösung

5 g (25.6 mmol) Pt als H₂Pt(OH)₆ (Hersteller Umicore AG & Co KG, Hanau) werden mit 3.08 mL (51.2 mmol) Ethylendiamin (zur Synthese, Merck) und 100 mL VE-Wasser in einem Glaskolben mit Rückflusskühler vorgelegt und unter Rühren erhitzt. Bei 60°C werden 1.19 g Ameisensäure (25.6 mmol) in 50 mL Wasser verdünnt über einen Tropftrichter zugegeben. Die Reaktionsmischung wird über Nacht (ca. 15 h) bei 75°C erhitzt. Es entsteht eine gelb-orange Lösung. Der Pt-Gehalt der Lösung beträgt 0.58 Gew.-%, dies entspricht einer Ausbeute von 32% des eingesetzten Platins.

### Beispiel 3

### Palladium(II)-(tetraammin)-Hydroxid-Lösung

10.0 g (0.094 mol) Palladium in Form von 41 g frisch gefälltem und chloridfrei gewaschenem feuchtem Palladiumhydroxid (Pd(OH)₂ x 2 H₂O; Hersteller Umicore AG & Co KG, Hanau) werden in einen tarierten 250 mL Dreihalskolben überführt und mit VE-Wasser auf eine Gesamtmenge von 50 g aufgefüllt. Unter Rühren werden 35.5 mL 25%-ige Ammoniaklösung zugegeben. Anschließend wird die Lösung unter Rühren am Rückfluss auf 65°C erhitzt und bei dieser Temperatur 2.5 Stunden gehalten. Die entstandene Lösung wird auf Raumtemperatur (ca. 23°C) abgekühlt, mit 0.2 g Aktivkohle (Norit SC) versetzt und bei Raumtemperatur eine Stunde gerührt. Es wird über einen Blaubandfilter filtriert und mit 10 mL VE-Wasser nachgewaschen. Man erhält 87.2 g einer gelb-orange gefärbten Lösung. Die Lösung enthält 11.13 Gew.-% Pd. Dies entspricht einer Ausbeute 97.05% bezogen auf eingesetztes Palladium. Der Gesamtchlorgehalt der Lösung beträgt 809 ppm (bezogen auf Pd).

Die Kapillarelektrophorese beweist die Anwesenheit des [Pd(NH₃)₄]²⁺-Kations durch Quervergleich mit Pd(NH₃)₄-Verbindungen, die nach konventioneller Methode hergestellt wurden (d.h. Hauptsignal bei einer Retentionszeit von 2.5 min).

### Beispiel 4

### Palladium(II)-bis-(ethylendiamin)-Hydroxid-Lösung

10.0 g (0.093 mol) Palladium in Form von ca. 37 g frisch gefälltem und chloridfrei gewaschenem feuchtem Palladiumhydroxid (Pd(OH)₂ x 2 H₂O; Hersteller Umicore AG & Co KG, Hanau) werden in einem tarierten Dreihalskolben vorgelegt und mit VE-Wasser auf eine Gesamtmasse von 70 g aufgefüllt. Der Dreihalskolben wird mit einem Rückflusskühler versehen, die Reaktionsmischung mittels eines Magnetrührers gerührt, und durch ein Ölbad temperiert. Die Ölbadtemperatur beträgt ca. 23°C. In einem Becherglas werden 11.2 g Ethylendiamin (0.186 mol; zur Synthese, Merck) mit 12.4 g VE-Wasser gemischt und auf eine Temperatur von ca. 18 - 20°C gekühlt (Wasser/Eis-Bad).

Die wässrige Ethylendiaminlösung wird zur gerührten Palladiumhydroxid-suspension in einer Portion gegeben. Durch Einstellen einer Ölbadtemperatur von 45°C wird die Reaktionsmischung für 18 h unter Rühren erwärmt. Die resultierende gelb-orangefarbene, weitgehend klare Lösung wird auf Raumtemperatur (ca. 23°C) abgekühlt. Anschließend werden 0.5 g Aktivkohle (Norit SC, Norit Deutschland GmbH) zugegeben und die Mischung 1 h bei Raumtemperatur gerührt. Nachfolgend wird über Blaubandfilter abfiltriert. Der Reaktionskolben wird mit 10 mL VE-Wasser ausgespült und dieses Wasser über den Blaubandfilter mit Aktivkohle abfiltriert und zur Produktlösung gegeben. Man erhält 98.7 g einer gelben klaren Lösung. Die Lösung enthält 9.94 Gew.-% Pd. Dies entspricht einer Ausbeute von 98.1% bezogen auf eingesetztes Palladium. Der GesamtchlorGehalt der Lösung beträgt 804 ppm bezogen auf Palladium.

### Beispiel 5

### Rhodium(III)-(hexaammin)-Hydroxid-Lösung

9.92 g Rhodium (0.0964 mol) in Form von ca. 31.4 g feuchtem, frisch gefälltem halogenidarm gewaschenem Rhodiumhydroxid (H₃Rh(OH)₆ bzw. Rh(OH)₃ x 3 H₂O, Hersteller Umicore AG & Co KG, Hanau) werden in einem 250 mL Dreihalskolen mit VE-Wasser versetzt, so dass das Gesamtgewicht der vorgelegten Suspension 75 g beträgt. Der Kolben wird mit Magnetrührer und Rückflusskühler ausgestattet und unter Rühren bei Raumtemperatur in einer Portion mit 44 mL 25%-igen Ammoniaklösung (entsprechend 11 g NH₃ = 0.65 mol) versetzt. Es wird unter Rühren auf eine Innentemperatur von 75°C erhitzt und die Lösung für 20 Stunden bei dieser Temperatur erhitzt Anschließend wird das Reaktionsgemisch auf Raumtemperatur (ca. 23°C) mittels eines Wasser/Eis-Bades abgekühlt und mit 0.5 g Aktivkohle (Norit SC) versetzt. Es wird 1 h bei Raumtemperatur gerührt und anschließend über ein Blaubandfilter filtriert. Der Reaktionskolben wird mit 10 mL VE-Wasser ausgespült und dieses über den Filter zum Reaktionsgemisch gegeben. Es resultieren 116.1 g einer klaren orangefarbenen Lösung. Die Lösung enthält 8.34 Gew.-% Rh. Dies entspricht einer Ausbeute von 97.6 % bezogen auf eingesetztes Rhodium. Der Gesamtchlorgehalt der Lösung beträgt 1210 ppm (bezogen auf Rh).

Die Kapillarelektrophorese zeigt drei Signale; ein Signal (1) im schwach anionischen Bereich, ein kleines Signal (2) am Neutralpunkt und ein mittelstarkes Signal (3) im kationischen Bereich. Dies weist auf ein Produktgemisch hin, bei dem einige Hydroxoliganden durch NH₃ ausgetauscht wurden, diese jedoch nicht vollständig. Neben der Zielverbindung [Rh(NH₃)₆](OH)₃ (Signal (3)) kann der neutrale teilsubstituierte Komplex [Rh(NH₃)₃(OH)₃] (Signal (2)) vorliegen. Die Signallage des anionischen Komplexes (1) weist auf eine nur geringe negative Ladung hin und kann dem Komplex H[Rh(NH₃)₂(OH)₄]⁻ zugeordnet werden.

### Beispiel 6

### Rhodium(III)-tris-(ethylendiamin)-Hydroxid-Lösung

200 g Rhodium (1.94 mol) in Form von 711.7 g feuchtem, frisch gefälltem und halogenidarm gewaschenem Rhodiumhydroxid (H₃Rh(OH)₆ bzw. Rh(OH)₃ x 3 H₂O, Hersteller Umicore AG & Co KG, Hanau) werden in einem tarierten 2 L Dreihalskolben mit VE-Wasser versetzt, so dass das Gesamtgewicht der vorgelegten Suspension 1000 g beträgt. Der Kolben wird mit KPG-Rührer und Rückflusskühler ausgestattet und unter Rühren bei Raumtemperatur in einer Portion mit 350.5 g (5.82 mol) Ethylendiamin (zur Synthese, Merck) versetzt. Durch Anlegen einer Ölbadtemperatur von 60°C wird die Reaktionsmischung unter Rühren erwärmt. Innerhalb von drei Stunden wird die Ölbadtemperatur langsam auf 90°C angehoben. Ab ca. 74°C beobachtet man eine leicht exotherme Reaktion und der Feststoff beginnt sich zu lösen. Nach 3 h wird die Reaktionsmischung mittels eines Wasser/Eis-Bades auf Raumtemperatur (ca. 23°C) abgekühlt und mit 5 g Aktivkohle (Norit SC) versetzt. Die Reaktionsmischung wird 1 h bei Raumtemperatur gerührt und anschließend über einen Blaubandfilter filtriert. Der Reaktionskolben wird mit 100 mL VE-Wasser ausgewaschen und dieses über den Filter zur Reaktionsmischung gegeben. Es resultieren 1814.4 g einer klaren orangefarbenen Lösung. Die Lösung enthält 11.0 Gew.-% Rh. Damit erhält man eine Rh-basierte isolierte Ausbeute von 99.8%. Der Gesamtchlorgehalt der Lösung beträgt 910 ppm (bezogen auf Rhodium).

Die Kapillarelektrophorese zeigt zwei kationische Signale, die den Verbindungen [Rh(en)₃](OH)₃ (Hauptsignal) und [Rh(en)₂(OH)₂]OH (schwaches Signal) zugeordnet werden können.

### Beispiel 7

### Rhodium(III)-tris-(ethylendiamin)-Acetat-Lösung

5.06 g Rhodium (49.2 mmol) in Form von 50.0 g Rhodium(III)(tris-ethylendiamin)-Hydroxid-Lösung (ca. 10 Gew.-% Rh, hergestellt nach Beispiel 6) werden in einem 100 mL Dreihalskolben eingewogen. Unter Rühren werden bei Raumtemperatur (ca. 23°C) 10.58 mL 100%-ige Essigsäure langsam zugetropft, bis ein pH-Wert von 7 erreicht ist. Die Zutropfdauer beträgt etwa 30 min; es tritt eine leichte Wärmeentwicklung auf. Der Rh-Gehalt der erhaltenen klaren gelben Lösung beträgt 8.2 Gew.-%.

## Patentansprüche

1. Verfahren zur Herstellung wasserhaltiger Zubereitungen von Komplexen der Platingruppenmetalle (PGM) mit der allgemeinen Formel (1)
[M^{A}(L)ₐ(H₂O)_{b}(O²⁻)_{c}(OH⁻)_{d}](OH⁻)ₑ(H⁺)_{f} (1)
worin
M^{A} = Platin (Pt) oder Palladium (Pd) in der Oxidationsstufe +2 vorliegt und
L = ein neutraler einzähniger oder zweizähniger Donorligand sowie
a = eine ganze Zahl von 1 bis 4 (für einzähnige Donorliganden) oder eine ganze Zahl von 1 bis 2 (für zweizähnige Donorliganden),
b = eine ganze Zahl von 0 bis 3,
c = eine ganze Zahl von 0 bis 3,
d = eine ganze Zahl von 0 bis 3,
e = eine ganze Zahl von 0 bis 2 und
f = eine ganze Zahl von 0 bis 4
bedeutet und worin das Platingruppenmetall M^{A} die Koordinationszahl 4 aufweist,
**dadurch gekennzeichnet, dass** die Hydroxokomplexe H₂Pd(OH)₄ (im Fall von M^{A} = Pd) oder H₂Pt(OH)₆ (im Fall von M^{A} = Pt) jeweils mit einem neutralen Donorliganden L umgesetzt werden, wobei mindestens eine Hydroxogruppe des betreffenden Hydroxokomplexes ausgetauscht wird und die Umsetzung im Fall von M^{A} = Pt in Gegenwart eines Reduktionsmittels durchgeführt wird, der Gesamthalogengehalt der Zubereitungen < 5000 ppm (bezogen auf den PGM-Gehalt) beträgt, die wasserhaltigen Zubereitungen wässrige Lösungen sind und die Umsetzung in wässriger Lösung erfolgt.

2. Verfahren zur Herstellung wasserhaltiger Zubereitungen von Komplexen der Platingruppenmetalle (PGM) mit der allgemeinen Formel (2)
[M^{B}(L)ₐ(H₂O)_{b}(O²⁻)_{c}(OH⁻)_{d}](OH⁻)ₑ(H⁺)_{f} (2)
worin
M^{B} = Platin (Pt) in der Oxidationsstufe +4 vorliegt und
L = ein neutraler einzähniger oder zweizähniger Donorligand sowie
a = eine ganze Zahl von 1 bis 6 (für einzähnige Donorliganden) oder eine ganze Zahl von 1 bis 3 (für zweizähnige Donorliganden),
b = eine ganze Zahl von 0 bis 5,
c = eine ganze Zahl von 0 bis 4,
d = eine ganze Zahl von 0 bis 5,
e = eine ganze Zahl von 0 bis 4 und
f = eine ganze Zahl von 0 bis 4
bedeutet und worin das Platingruppenmetall M^{B} die Koordinationszahl 6 aufweist,
**dadurch gekennzeichnet, dass** der Hydroxokomplex H₂Pt(OH)₆ mit einem neutralen Donorliganden L umgesetzt wird, wobei mindestens eine Hydroxogruppe des Hydroxokomplexes ausgetauscht wird, der Gesamthalogengehalt der Zubereitungen < 5000 ppm (bezogen auf den PGM-Gehalt) beträgt, die wasserhaltigen Zubereitungen wässrige Lösungen sind und die Umsetzung in wässriger Lösung erfolgt.

3. Verfahren zur Herstellung wasserhaltiger Zubereitungen von Komplexen der Platingruppenmetalle (PGM) der allgemeinen Formel (3)
[M^{C}(L)ₐ(H₂O)_{b}(O²⁻)_{c}(OH⁻)_{d}](OH⁻)ₑ(H⁺)_{f} (3)
worin
M^{C} = Rhodium (Rh) oder Iridium (Ir) in der Oxidationsstufe +3 vorliegt und
L = ein neutraler einzähniger oder zweizähniger Donorligand sowie
a = eine ganze Zahl von 1 bis 6 (für einzähnige Donorliganden oder eine ganze Zahl von 1 bis 3 (für zweizähnige Donorliganden),
b = eine ganze Zahl von 0 bis 5,
c = eine ganze Zahl von 0 bis 4,
d = eine ganze Zahl von 0 bis 5,
e = eine ganze Zahl von 0 bis 3 und
f = eine ganze Zahl von 0 bis 5
bedeutet und worin das Platingruppenmetall M^{C} die Koordinationszahl 6 aufweist,
**dadurch gekennzeichnet, dass** ein Hydroxokomplex des Typs H₃M^{C}(OH)₆ mit einem neutralen Donorliganden L umgesetzt wird, wobei mindestens eine Hydroxogruppe des Hydroxokomplexes ausgetauscht wird, der Gesamthalogengehalt der Zubereitungen < 5000 ppm (bezogen auf den PGM-Gehalt) beträgt, die wasserhaltigen Zubereitungen wässrige Lösungen sind und die Umsetzung in wässriger Lösung erfolgt.

4. Verfahren gemäß einem der Ansprüche 1 bis 3, wobei die Indices a - f in den allgemeinen Formeln (1), (2) und (3) so gewählt werden, dass die resultierenden PGM-Komplexe elektroneutral sind.

5. Verfahren gemäß einem der Ansprüche 1 bis 4, wobei die Reaktionstemperatur im Bereich von 40 bis 110°C, vorzugsweise im Bereich von 45 bis 100°C liegt.

6. Verfahren gemäß einem der Ansprüche 1 bis 5, wobei die Reaktionszeit im Bereich von 2 und 24 Stunden, vorzugsweise im Bereich von 2.5 bis 20 Stunden liegt.

7. Verfahren gemäß einem der Ansprüche 1 bis 6, wobei als einzähnige Donorliganden Ammoniak oder Liganden aus der Gruppe der Monoalkylamine, Dialkylamine, Trialkylamine, Monoalkanolamine, Dialkanolamine, Trialkanolamine, Monoarylamine, Diarylamine, Triarylamine, Trialkylphosphine, Triarylphosphine, Trialkoxyphosphine, Triaryloxyphosphine oder Gemische davon eingesetzt werden.

8. Verfahren gemäß Anspruch 7, wobei als einzähnige Donorliganden die stickstoffhaltigen Liganden Ammoniak, Ethanolamin, Ethylamin, Diethylamin, Isopropanolamin oder Gemische davon eingesetzt werden.

9. Verfahren gemäß einem der Ansprüche 1 bis 6, wobei als zweizähnige Donorliganden Liganden aus der Gruppe der Alkylendiamine, Arylendiamine, Alkylendiphosphine oder Arylendiphosphine oder Gemische davon eingesetzt werden.

10. Verfahren gemäß Anspruch 9, wobei als zweizähnige Donorliganden die stickstoffhaltigen Liganden Ethylendiamin, o-Phenylendiamin, Trimethylendiamin, Tetramethylendiamin, Pentamethylendiamin, Hexamethylendiamin, 1,2-Propylendiamin oder Gemische davon eingesetzt werden.

11. Verfahren gemäß einem der Ansprüche 1 bis 10, wobei der Austausch der OH-Gruppen in den Hydroxokomplexen H₂Pd(OH)₄, H₂Pt(OH)₆ oder H₃M^{C}(OH)₆ (im Falle von M^{C} = Rh^{III} oder Ir^{III}) durch die neutralen Donorliganden L nicht vollständig ist und die resultierenden Verbindungen der allgemeinen Formeln (1), (2) oder (3) weiterhin Aquo- (H₂O), Oxo- (O²⁻) oder Hydroxo- (OH⁻) Liganden enthalten.

12. Verfahren gemäß Anspruch 1, wobei im Falle von M^{A} = Platin(II) als Reduktionsmittel Wasserstoff, Formiergas, Hydrazin (N₂H₄), Oxalsäure (H₂C₂O₄), Formaldehyd (HCHO) oder Ameisensäure (HCOOH) oder Gemische davon verwendet werden.

13. Verfahren gemäß einem der Ansprüche 1 bis 12, wobei die wasserhaltigen Zubereitungen organische Lösungsmittel, vorzugsweise aliphatische Alkohole und/oder aliphatische Ketone enthalten und die Umsetzung in wasserhaltigen Lösungsmittelgemischen erfolgt.

14. Verfahren gemäß einem der Ansprüche 1 bis 13, wobei die wasserhaltigen Zubereitungen einen pH-Wert im Bereich pH 5 bis 14, vorzugsweise im Bereich pH 7 bis 14 aufweisen.

15. Verfahren gemäß einem der Ansprüche 1 bis 14, wobei die Konzentration der Platingruppenmetalle M^{A}, M^{B} oder M^{C} in der wasserhaltigen Zubereitung im Bereich von 0.5 bis 15 Gew.-% liegt.

16. Verfahren gemäß Anspruch 1, wobei das Reduktionsmittel im Äquivalentverhältnis von 1:1 bis 2:1 (bezogen auf M^{A} = Pt) zugesetzt wird.

17. Verfahren gemäß einem der Ansprüche 1 bis 16, wobei der Gesamthalogengehalt, insbesondere der Gesamtchlorgehalt der Zubereitungen < 2000 ppm beträgt (jeweils bezogen auf den PGM-Gehalt).

18. Verfahren gemäß einem der Ansprüche 1 bis 17, weiterhin umfassend eine Substitution der OH-Anionen (OH⁻)ₑ in den PGM-Komplexen der allgemeinen Formeln
[M^{A}(L)_{A}(H₂O)_{b}(O²⁻)_{c}(OH⁻)_{d}](OH⁻)ₑ(H⁺)_{f} (1),
[M^{B}(L)ₐ(H₂O)_{b}(O²⁻)_{c}(OH⁻)_{d}](OH⁻)ₑ(H⁺)_{f} (2)
[M^{C}(L)ₐ(H₂O)_{b}(O²⁻)_{c}(OH⁻)_{d}](OH⁻)ₑ(H⁺)_{f} (3)
durch eines oder mehrere Anionen anorganischer oder organischer Säuren (wobei die Bedeutung von M^{A}, M^{B}, M^{C}, L, a, b, c, d, e und f wie in den Ansprüchen 1 bis 3 definiert ist und wobei e ≠ 0 ist).

19. Verfahren gemäß Anspruch 18, wobei als Anionen anorganischer oder organischer Säuren solche aus der Gruppe der Acetate, Formiate, Oxalate, Carbonate, Hydrogencarbonate, Sulfate, Nitrate, Phosphate, Tetrafluorborate oder deren Gemische eingesetzt werden.

20. Verfahren zur Herstellung von galvanischen Bädern, zur Herstellung von heterogenen Katalysatoren, zur Herstellung von weiteren Komplexverbindungen oder zur Herstellung von Metallpulvern mit den Schritten:
- Bereitstellen wasserhaltiger Zubereitungen von Komplexen der Platingruppenmetalle (PGM) mit der allgemeinen Formel (1) durch ein Verfahren der Ansprüche 1 bis 19;
- Umsetzung oder Formulierung der wasserhaltigen Zubereitungen oder der darin enthaltenen Komplexe der Platingruppenmetalle (PGM) zu galvanischen Bädern, heterogenen Katalysatoren, weiteren Komplexverbindungen oder zu Metallpulvem.

21. Verfahren nach Anspruch 20, wobei der Schritt der Umsetzung oder Formulierung der wasserhaltigen Zubereitungen oder der darin enthaltenen Komplexe der Platingruppenmetalle (PGM) eine Reaktion ausgewählt aus der Gruppe bestehend aus Reduktion eines Komplexes der Platingruppenmetalle (PGM), Oxidation eines Komplexes der Platingruppenmetalle (PGM), Ligandenaustausch eines Komplexes der Platingruppenmetalle (PGM) und deren Kombinationen umfaßt.

22. Wasserhaltige Zubereitung eines Pt(II)-Komplexes, enthaltend als Hauptprodukt einen Komplex der Zusammensetzung [Pt(en)₂](OH)₂ wobei der Gesamthalogengehalt, insbesondere der Gesamtchlorgehalt der Zubereitungen < 5000 ppm beträgt (jeweils bezogen auf den PGM-Gehalt).

23. Wasserhaltige Zubereitung eines Pt(II)-Komplexes, enthaltend als Hauptprodukt einen Komplex der Zusammensetzung [Pt(EA)₄](OH)₂ wobei der Gesamthalogengehalt, insbesondere der Gesamtchlorgehalt der Zubereitungen < 5000 ppm (jeweils bezogen auf den PGM-Gehalt).

24. Wasserhaltige Zubereitung eines Pt(II)-Komplexes, enthaltend als Hauptprodukt einen Komplex der Zusammensetzung [Pt(en)₂]CO₃ wobei der Gesamthalogengehalt, insbesondere der Gesamtchlorgehalt der Zubereitungen < 5000 ppm (jeweils bezogen auf den PGM-Gehalt).

25. Wasserhaltige Zubereitung eines Pt(II)-Komplexes, enthaltend als Hauptprodukt einen Komplex der Zusammensetzung [Pt(EA)₄]CO₃ wobei der Gesamthalogengehalt, insbesondere der Gesamtchlorgehalt der Zubereitungen < 5000 ppm (jeweils bezogen auf den PGM-Gehalt).

26. Wasserhaltige Zubereitung eines Pt(II)-Komplexes, enthaltend als Hauptprodukt einen Komplex der Zusammensetzung [Pt(EA)₄](CH₃COO)₂ wobei der Gesamthalogengehalt, insbesondere der Gesamtchlorgehalt der Zubereitungen < 5000 ppm beträgt (jeweils bezogen auf den PGM-Gehalt).

27. Wasserhaltige Zubereitung eines Pt(II)-Komplexes, enthaltend als Hauptprodukt einen Komplex der Zusammensetzung [Pt(EA)₄](HCO₃)₂ wobei der Gesamthalogengehalt, insbesondere der Gesamtchlorgehalt der Zubereitungen < 5000 ppm beträgt (jeweils bezogen auf den PGM-Gehalt).

28. Wasserhaltige Zubereitung eines Pt(II)-Komplexes, insbesondere nach einem der Ansprüche 22 bis 27, erhältlich nach einem Verfahren der Ansprüche 1 bis 19 wobei der Gesamthalogengehalt, insbesondere der Gesamtchlorgehalt der Zubereitungen < 5000 ppm beträgt (jeweils bezogen auf den PGM-Gehalt).

29. Wasserhaltige Zubereitung eines Pt(II)-Komplexes, insbesondere nach einem der Ansprüche 22 bis 28, wobei der Gesamthalogengehalt, insbesondere der Gesamtchlorgehalt der Zubereitungen < 2000 ppm beträgt (jeweils bezogen auf den PGM-Gehalt).

## Claims

1. Method for producing water-containing preparations of complexes of platinum group metals (PGM), having the general formula (1)
[M^{A}(L)ₐ(H₂O)_{b}(O²⁻)_{c}(OH⁻)_{d}](OH⁻)ₑ(H⁺)_{f} (1)
wherein
M^{A} = platinum (Pt) or palladium (Pd) in the +2 oxidation state and
L = a neutral monodentate or bidentate donor ligand and
a = an integer from 1 to 4 (for monodentate donor ligands) or an integer from 1 to 2 (for bidentate donor ligands),
b = an integer from 0 to 3,
c = an integer from 0 to 3,
d = an integer from 0 to 3,
e = an integer from 0 to 2 and
f = an integer from 0 to 4,
and wherein the platinum group metal M^{A} has a coordination number of 4, **characterized in that** the hydroxo complexes H₂Pd(OH)₄ (in the case of M^{A} = Pd) or H₂Pt(OH)₆ (in the case of M^{A} = Pt) are each reacted with a neutral donor ligand L, wherein at least one hydroxo group of the relevant hydroxo complex is substituted, and the reaction in the case of M^{A} = Pt is performed in the presence of a reducing agent, the total halogen content of the preparations is < 5000 ppm (relative to the PGM content) is, the water-containing preparations are aqueous solutions, and the reaction takes place in aqueous solution.

2. Method for producing water-containing preparations of complexes of platinum group metals (PGM), having the general formula (2)
[M^{B}(L)ₐ(H₂O)_{b}(O²⁻)_{c}(OH⁻)_{d}](OH⁻)ₑ(H⁺)_{f} (2)
wherein
M^{B} = platinum (Pt) in the +4 oxidation state and
L = a neutral monodentate or bidentate donor ligand and
a = an integer from 1 to 6 (for monodentate donor ligands) or an integer from 1 to 3 (for bidentate donor ligands),
b = an integer from 0 to 5,
c = an integer from 0 to 4,
d = an integer from 0 to 5,
e = an integer from 0 to 4 and
f = an integer from 0 to 4,
and wherein the platinum group metal M^{B} has a coordination number of 6, **characterized in that** the hydroxo complex H₂Pt(OH)₆ is reacted with a neutral donor ligand L, wherein at least one hydroxo group of the hydroxo complex is substituted, the total halogen content of the preparations is < 5000 ppm (relative to the PGM content), the aqueous preparations are aqueous solutions, and the reaction takes place in aqueous solution.

3. Method for producing water-containing preparations of complexes of platinum group metals (PGM), having the general formula (3)
[M^{C}(L)ₐ(H₂O)_{b}(O²⁻)_{c}(OH⁻)_{d}](OH⁻)ₑ(H⁺)_{f} (3)
wherein
M^{C} = rhodium (Rh) or iridium (Ir) in the +3 oxidation state and
L = a neutral monodentate or bidentate donor ligand and
a = an integer from 1 to 6 (for monodentate donor ligands) or an integer from 1 to 3 (for bidentate donor ligands),
b = an integer from 0 to 5,
c = an integer from 0 to 4,
d = an integer from 0 to 5,
e = an integer from 0 to 3 and
f = an integer from 0 to 5,
and wherein the platinum group metal M^{C} has a coordination number of 6, **characterized in that** a hydroxo complex of the type H₃M^{C}(OH)₆ is reacted with a neutral donor ligand L, wherein at least one hydroxo group of the hydroxo complex is substituted, the total halogen content of the preparations is < 5000 ppm (relative to the PGM content), the water-containing preparations are aqueous solutions, and the reaction takes place in aqueous solution.

4. Method according to any one of the claims 1 to 3, wherein the indices a - f in the general formulas (1), (2) and (3) are selected such that the resulting PGM complexes are electrically neutral.

5. Method according to any one of the claims 1 to 4, wherein the reaction temperature is in the range from 40 to 110 °C, preferably in the range from 45 to 100 °C.

6. Method according to any one of the claims 1 to 5, wherein the reaction time is in the range from 2 to 24 hours, preferably in the range from 2.5 to 20 hours.

7. Method according to any one of the claims 1 to 6, wherein ammonia or ligands from the group consisting of monoalkylamines, dialkylamines, trialkylamines, monoalkanolamines, dialkanolamines, trialkanolamines, monoarylamines, diarylamines, triarylamines, trialkylphosphines, triarylphosphines, trialkoxyphosphines, triaryloxyphosphines, or mixtures thereof are used as monodentate donor ligands.

8. Method according to claim 7, wherein the nitrogen-containing ligands ammonia, ethanolamine, ethylamine, diethylamine, isopropanolamine, or mixtures thereof are used as monodentate donor ligands.

9. Method according to any one of the claims 1 to 6, wherein ligands from the group consisting of alkylenediamines, arylenediamines, alkylenediphosphines and arylenediphosphines, or mixtures thereof are used as bidentate donor ligands.

10. Method according to claim 9, wherein the nitrogen-containing ligands ethylenediamine, o-phenylenediamine, trimethylenediamine, tetramethylenediamine, pentamethylenediamine, hexamethylenediamine, 1,2-propylenediamine, or mixtures thereof are used as bidentate donor ligands.

11. Method according to any one of the claims 1 to 10, wherein the substitution of the OH groups in the hydroxo complexes H₂Pd(OH)₄, H₂Pt(OH)₆ or H₃M^{C}(OH)₆ (in the case of M^{C} = Rh^{III} or Ir^{III}) by the neutral donor ligands L is incomplete, and the resulting compounds of the general formulas (1), (2) or (3) continue to contain aquo (H₂O), oxo (O²⁻) or hydroxo (OH⁻) ligands.

12. Method according to claim 1, wherein hydrogen, forming gas, hydrazine (N₂H₄), oxalic acid (H₂C₂O₄), formaldehyde (HCHO), or formic acid (HCOOH), or mixtures thereof, are used as a reducing agent in the case of M^{A} = platinum(II).

13. Method according to any one of the claims 1 to 12, wherein the water-containing preparations contain organic solvents, preferably aliphatic alcohols and/or aliphatic ketones, and the reaction takes place in water-containing solvent mixtures.

14. Method according to any one of the claims 1 to 13, wherein the water-containing preparations have a pH value in the range of pH 5 to 14, preferably in the range of pH 7 to 14.

15. Method according to any one of the claims 1 to 14, wherein the concentration of the platinum group metals M^{A}, M^{B} or M^{C} in the water-containing preparation is in a range from 0.5 to 15 wt%.

16. Method according to claim 1, wherein the reducing agent is added in the equivalence ratio of 1:1 to 2:1 (relative to M^{A} = Pt).

17. Method according to any one of the claims 1 to 16, wherein the total halogen content, in particular the total chlorine content, of the preparations is < 2000 ppm (respectively relative to the PGM content).

18. Method according to any one of the claims 1 to 17, further comprising a substitution of the OH anions (OH⁻)ₑ in the PGM complexes of the general formulas
[M^{A}(L)ₐ(H₂O)_{b}(O²⁻)_{c}(OH⁻)_{d}](OH⁻)ₑ(H⁺)_{f} (1)
[M^{B}(L)ₐ(H₂O)_{b}(O²⁻)_{c}(OH⁻)_{d}](OH⁻)ₑ(H⁺)_{f} (2)
[M^{C}(L)ₐ(H₂O)_{b}(O²⁻)_{c}(OH⁻)_{d}](OH⁻)ₑ(H⁺)_{f} (3)
by one or more anions of inorganic or organic acids (wherein the meanings of M^{A}, M^{B}, M^{C}, L, a, b, c, d, e and f are as defined in claims 1 to 3, and wherein e ≠ 0).

19. Method according to claim 18, wherein anions from the group consisting of acetates, formates, oxalates, carbonates, hydrogen carbonates, sulfates, nitrates, phosphates, tetrafluoroborates, and mixtures thereof are used as anions of inorganic or organic acids.

20. Method for producing electroplating baths, for producing heterogeneous catalysts, for producing further complexes or for producing metal powders, comprising the steps of:
- providing water-containing preparations of complexes of platinum group metals (PGM) having the general formula (1) via a method according to claims 1 to 19;
- reacting or formulating the water-containing preparations or the complexes of the platinum group metals (PGM) contained therein to produce electroplating baths, heterogeneous catalysts, further complexes or metal powders.

21. Method according to claim 20, wherein the step of reacting or formulating the water-containing preparations or the complexes of platinum group metals (PGM) contained therein comprises a reaction selected from the group consisting of reduction of a complex of the platinum group metals (PGM), oxidation of a complex of the platinum group metals (PGM), ligand replacement of a complex of the platinum group metals (PGM), and combinations thereof.

22. Water-containing preparation of a Pt(II) complex containing a complex of the composition [Pt(en)₂](OH)₂ as the main product, wherein the total halogen content, in particular the total chlorine content, of the preparations is < 5000 ppm (respectively relative to the PGM content).

23. Water-containing preparation of a Pt(II) complex containing a complex of the composition [Pt(EA)₄](OH)₂ as the main product, wherein the total halogen content, in particular the total chlorine content, of the preparations is < 5000 ppm (respectively relative to the PGM content).

24. Water-containing preparation of a Pt(II) complex containing a complex of the composition [Pt(en)₂]CO₃ as the main product, wherein the total halogen content, in particular the total chlorine content, of the preparations is < 5000 ppm (respectively relative to the PGM content).

25. Water-containing preparation of a Pt(II) complex containing a complex of the composition [Pt(EA)₄]CO₃ as the main product, wherein the total halogen content, in particular the total chlorine content, of the preparations is < 5000 ppm (based in each case on the PGM content).

26. Water-containing preparation of a Pt(II) complex containing a complex of the composition [Pt(EA)₄](CH₃COO)₂ as the main product, wherein the total halogen content, in particular the total chlorine content, of the preparations is < 5000 ppm (respectively relative to the PGM content).

27. Water-containing preparation of a Pt(II) complex containing a complex of the composition [Pt(EA)₄](HCO₃)₂ as the main product, wherein the total halogen content, in particular the total chlorine content, of the preparations is < 5000 ppm (respectively relative to the PGM content).

28. Water-containing preparation of a Pt(II) complex, in particular according to any one of the claims 22 to 27, obtainable by a method of claims 1 to 19, wherein the total halogen content, in particular the total chlorine content, of the preparations is < 5000 ppm (respectively relative to the PGM content).

29. Water-containing preparation of a Pt(II) complex, in particular according to any one of the claims 22 to 28, wherein the total halogen content, in particular the total chlorine content, of the preparations is < 2000 ppm (respectively relative to the PGM content).

## Revendications

1. Procédé de production de préparations aqueuses de complexes des métaux du groupe du platine (MGP) présentant la formule générale (1)
[M^{A}(L)ₐ(H₂O)_{b}(O²⁻)_{c}(OH⁻)_{d}](OH⁻)ₑ(H⁺)_{f} (1)
dans laquelle
M^{A} = platine (Pt) ou palladium (Pd) se trouvant dans l'étage d'oxydation +2 et
L = un ligand donneur monodentate ou bidentate neutre ainsi que
a = un nombre entier de 1 à 4 (pour les ligands donneurs monodentates) ou un nombre entier de 1 à 2 (pour les ligands donneurs bidentates),
b = un nombre entier de 0 à 3,
c = un nombre entier de 0 à 3,
d = un nombre entier de 0 à 3,
e = un nombre entier de 0 à 2 et
f = un nombre entier de 0 à 4
et dans laquelle le métal du groupe du platine M^{A} présente le nombre de coordination 4,
**caractérisé en ce que** les complexes hydroxo H₂Pd(OH)₄ (dans le cas où M^{A}= Pd) ou H₂Pt(OH)₆ (dans le cas où M^{A} = Pt) sont transformés respectivement avec un ligand donneur neutre L, au moins un groupe hydroxo du complexe hydroxo concerné étant échangé et la transformation étant réalisée en présence d'un agent réducteur dans le cas où M^{A} = Pt, la teneur totale en halogène des préparations étant < 5000 ppm (par rapport à la teneur en MGP), les préparations aqueuses étant des solutions aqueuses et la transformation étant réalisée en solution aqueuse.

2. Procédé de production de préparations aqueuses de complexes des métaux du groupe du platine (MGP) présentant la formule générale (2)
[M^{B}(L)ₐ(H₂O)_{b}(O²⁻)_{c}(OH⁻)_{d}](OH⁻)ₑ(H⁺)_{f} (2)
dans laquelle
M^{B} = platine (Pt) se trouvant dans l'étage d'oxydation +4 et
L = un ligand donneur monodentate ou bidentate neutre ainsi que
a = un nombre entier de 1 à 6 (pour les ligands donneurs monodentates) ou un nombre entier de 1 à 3 (pour les ligands donneurs bidentates),
b = un nombre entier de 0 à 5,
c = un nombre entier de 0 à 4,
d = un nombre entier de 0 à 5,
e = un nombre entier de 0 à 4 et
f = un nombre entier de 0 à 4
et dans laquelle le métal du groupe du platine M^{B} présente le nombre de coordination 6,
**caractérisé en ce que** le complexe hydroxo H₂Pt(OH)₆ est transformé avec un ligand donneur neutre L, au moins un groupe hydroxo du complexe hydroxo étant échangé, la teneur totale en halogène des préparations étant < 5000 ppm (par rapport à la teneur en MGP), les préparations aqueuses étant des solutions aqueuses et la transformation étant réalisée en solution aqueuse.

3. Procédé de production de préparations aqueuses de complexes des métaux du groupe du platine (MGP) de formule générale (3)
[M^{C}(L)ₐ(H₂O)_{b}(O²⁻)_{c}(OH⁻)_{d}](OH⁻)ₑ(H⁺)_{f} (3)
dans laquelle
M^{C} = rhodium (Rh) ou iridium (Ir) se trouvant dans l'étage d'oxydation +3 et
L = un ligand donneur monodentate ou bidentate neutre ainsi que
a = un nombre entier de 1 à 6 (pour les ligands donneurs monodentates) ou un nombre entier de 1 à 3 (pour les ligands donneurs bidentates),
b = un nombre entier de 0 à 5,
c = un nombre entier de 0 à 4,
d = un nombre entier de 0 à 5,
e = un nombre entier de 0 à 3 et
f = un nombre entier de 0 à 5
et dans laquelle le métal du groupe platine M^{C} présente le nombre de coordination 6,
**caractérisé en ce qu'**un complexe hydroxo de type H₃M^{C}(OH)₆ est transformé avec un ligand donneur neutre L, au moins un groupe hydroxo du complexe hydroxo étant échangé, la teneur totale en halogène des préparations étant < 5000 ppm (par rapport à la teneur en MGP), les préparations aqueuses étant des solutions aqueuses et la transformation étant réalisée en solution aqueuse.

4. Procédé selon l'une quelconque des revendications 1 à 3, dans lequel les indices a à f dans les formules générales (1), (2) et (3) sont choisis de manière à ce que les complexes MGP obtenus sont électroneutres.

5. Procédé selon l'une quelconque des revendications 1 à 4, dans lequel la température de réaction se situe dans la plage de 40 à 110 °C, de préférence dans la plage de 45 à 100 °C.

6. Procédé selon l'une quelconque des revendications 1 à 5, dans lequel le temps de réaction se situe dans la plage de 2 à 24 heures, de préférence dans la plage de 2,5 à 20 heures.

7. Procédé selon l'une quelconque des revendications 1 à 6, dans lequel on utilise comme ligands donneurs monodentates l'ammoniac ou des ligands du groupe des monoalkylamines, dialkylamines, trialkylamines, monoalcanolamines, dialcanolamines, trialcanolamines, monoarylamines, diarylamines, triarylamines, trialkylphosphines, triarylphosphines, trialcoxyphosphines, triaryloxyphosphines ou des mélanges de ceux-ci.

8. Procédé selon la revendication 7, dans lequel on utilise comme ligands donneurs monodentates les ligands azotés ammoniac, éthanolamine, éthylamine, diéthylamine, isopropanolamine ou des mélanges de ceux-ci.

9. Procédé selon l'une quelconque des revendications 1 à 6, dans lequel on utilise comme ligands donneurs bidentates des ligands du groupe des alkylènediamines, arylènediamines, alkylènediphosphines ou arylènediphosphines ou des mélanges de ceux-ci.

10. Procédé selon la revendication 9, dans lequel on utilise comme ligands donneurs bidentates les ligands azotés éthylènediamine, o-phénylènediamine, triméthylènediamine, tétraméthylènediamine, pentaméthylènediamine, hexaméthylènediamine, 1,2-propylènediamine ou des mélanges de ceux-ci.

11. Procédé selon l'une quelconque des revendications 1 à 10, dans lequel l'échange des groupes OH dans les complexes hydroxo H₂Pd(OH)₄, H₂Pt(OH)₆ ou H₃M^{C}(OH)₆ (dans les cas où M^{C} = Rh^{III} ou Ir^{III}) par les ligands donneurs neutres L n'est pas complet et les composés obtenus des formules générales (1), (2) ou (3) contiennent en outre des ligands aquo- (H₂O), oxo- (O²⁻) ou hydroxo- (OH⁻).

12. Procédé selon la revendication 1, dans lequel, au cas où M^{A} = platine(II), on utilise comme agent réducteur de l'hydrogène, du gaz de formage, de l'hydrazine (N₂H₄), de l'acide oxalique (H₂C₂O₄), du formaldéhyde (HCHO) ou de l'acide formique (HCOOH) ou des mélanges de ceux-ci.

13. Procédé selon l'une quelconque des revendications 1 à 12, dans lequel les préparations aqueuses contiennent un solvant organique, de préférence des alcools aliphatiques et/ou des cétones aliphatiques, et la transformation est réalisée dans des mélanges de solvants aqueux.

14. Procédé selon l'une quelconque des revendications 1 à 13, dans lequel les préparations aqueuses présentent un pH dans la plage de pH 5 à 14, de préférence dans la plage de pH 7 à 14.

15. Procédé selon l'une quelconque des revendications 1 à 14, dans lequel la concentration en métaux du groupe platine M^{A}, M^{B} ou M^{C} dans la préparation aqueuse se situe dans la plage de 0,5 à 15 % en poids.

16. Procédé selon la revendication 1, dans lequel l'agent réducteur est ajouté en une proportion équivalente de 1:1 à 2:1 (par rapport à M^{A} = Pt).

17. Procédé selon l'une quelconque des revendications 1 à 16, dans lequel la teneur totale en halogène, en particulier la teneur totale en chlore, des préparations est < 2000 ppm (à chaque fois par rapport à la teneur en MGP).

18. Procédé selon l'une quelconque des revendications 1 à 17, comprenant en outre une substitution des anions OH (OH⁻)ₑ dans les complexes des MGP des formules générales
[M^{A}(L)ₐ(H₂O)_{b}(O²⁻)_{c}(OH⁻)_{d}](OH⁻)ₑ(H⁺)_{f} (1)
[M^{B}(L)ₐ(H₂O)_{b}(O²⁻)_{c}(OH⁻)_{d}](OH⁻)ₑ(H⁺)_{f} (2)
[M^{C}(L)ₐ(H₂O)_{b}(O²⁻)_{c}(OH⁻)_{d}](OH⁻)ₑ(H⁺)_{f} (3)
par un ou plusieurs anions d'acides inorganiques ou organiques (la signification de M^{A}, M^{B}, M^{C}, L, a, b, c, d, e et f étant telle que définie dans les revendications 1 à 3 et e étant ≠ 0).

19. Procédé selon la revendication 18, dans lequel on utilise comme anions d'acides inorganiques ou organiques ceux du groupe des acétates, formiates, oxalates, carbonates, hydrogénocarbonates, sulfates, nitrates, phosphates, tétrafluoroborates ou des mélanges de ceux-ci.

20. Procédé de production de bains galvaniques, de production de catalyseurs hétérogènes, de production d'autres composés complexes ou de production de poudres métalliques présentant les étapes de :
- mise à disposition de préparations aqueuses de complexes des métaux du groupe du platine (MGP) présentant la formule générale (1) selon un procédé des revendications 1 à 19 ;
- transformation ou formulation des préparations aqueuses ou des complexes des métaux du groupe du platine (MGP) qui y sont contenus en bains galvaniques, en catalyseurs hétérogènes, en autres composés complexes ou en poudres métalliques.

21. Procédé selon la revendication 20, dans lequel l'étape de transformation ou de formulation des préparations aqueuses ou des complexes des métaux du groupe du platine (MGP) qui y sont contenus comprend une réaction choisie dans le groupe constitué par la réduction d'un complexe des métaux du groupe du platine (MGP), l'oxydation d'un complexe des métaux du groupe du platine (MGP), l'échange de ligands d'un complexe des métaux du groupe du platine (MGP) et des combinaisons de ceux-ci.

22. Préparation aqueuse d'un complexe de Pt(II), contenant comme produit principal un complexe de composition [Pt(en)₂](OH)₂, la teneur totale en halogène, en particulier la teneur totale en chlore, des préparations étant < 5000 ppm (à chaque fois par rapport à la teneur en MGP).

23. Préparation aqueuse d'un complexe de Pt(II), contenant comme produit principal un complexe de composition [Pt(EA)₄](OH)₂, la teneur totale en halogène, en particulier la teneur totale en chlore, des préparations étant < 5000 ppm (à chaque fois par rapport à la teneur en MGP).

24. Préparation aqueuse d'un complexe de Pt(II), contenant comme produit principal un complexe de composition [Pt(en)₂]CO₃, la teneur totale en halogène, en particulier la teneur totale en chlore, des préparations étant < 5000 ppm (à chaque fois par rapport à la teneur en MGP).

25. Préparation aqueuse d'un complexe de Pt(II), contenant comme produit principal un complexe de composition [Pt(EA)₄]CO₃, la teneur totale en halogène, en particulier la teneur totale en chlore, des préparations étant < 5000 ppm (à chaque fois par rapport à la teneur en MGP).

26. Préparation aqueuse d'un complexe de Pt(II), contenant comme produit principal un complexe de composition [Pt(EA)₄](CH₃COO)₂, la teneur totale en halogène, en particulier la teneur totale en chlore, des préparations étant < 5000 ppm (à chaque fois par rapport à la teneur en MGP).

27. Préparation aqueuse d'un complexe de Pt(II), contenant comme produit principal un complexe de composition [Pt(EA)₄](HCO₃)₂, la teneur totale en halogène, en particulier la teneur totale en chlore, des préparations étant < 5000 ppm (à chaque fois par rapport à la teneur en MGP).

28. Préparation aqueuse d'un complexe de Pt(II), en particulier selon l'une quelconque des revendications 22 à 27, pouvant être obtenue selon un procédé des revendications 1 à 19, la teneur totale en halogène, en particulier la teneur totale en chlore, des préparations étant < 5000 ppm (à chaque fois par rapport à la teneur en MGP).

29. Préparation aqueuse d'un complexe de Pt(II), en particulier selon l'une quelconque des revendications 22 à 28, la teneur globale en halogène, en particulier la teneur globale en chlore, des préparations étant < 2000 ppm, (à chaque fois par rapport à la teneur en MGP).
